# EUROPEAN PATENT APPLICATION

(11) **EP 2 224 688 A1**
(43) Date of publication of application: **01.09.2010**
(21) Application number: 09161818.1
(22) Date of filing: 03.06.2009
(51) Int. Cl.: H04L 29/08, H04L 29/06

(54) **Configuration of network devices**

(30) Priority: 06.02.2009 US 322804
(71) Applicant: Mitel Networks Corporation, Ottawa, ON K2K 2W7 (CA)
(72) Inventor: Gray, Thomas A., Mansfield Québec J0X 1V0 (CA); Albert, John, Kanata Ontario K2V 1B5 (CA); Yin, Jianqi, Ottawa Ontario (CA)
(74) Representative: Derry, Paul Stefan

(57) **Abstract**

The present specification provides a configurable end-user device comprising a computing environment comprising at least one central processing unit, volatile storage, non-volatile storage, and a network interface interconnected by a bus. The network interface is connectable to one or more other end-user devices via a local area network. The end-user devices, including the configurable end-user device, for accessing at least one service that is available on a wide area network connected to the local area network. The configurable end-user device having a configuration profile storing user-associated feature sets associated with respective log-in data, each user-associated feature set defining how the configurable end-user device is to be configured when the respective log-in data is received at the configurable end-user device. Furthermore a user configuration management server, a local configuration management server and an aggregator are provided for storing copies of configuration profiles.

## Description

This application is related to US Application No. 11/781,319 filed July 23, 2007, and to Application No. 11/774,352 filed July 6, 2007.

The present specification relates generally to computing devices and more specifically relates to the configuration of end-user devices such as telecommunications devices, Internet Protocol ("IP") telephony devices and other systems.

Those skilled in the art of IP telephony are well aware that "The Session Initiation Protocol (SIP) is an application-layer control (signaling) protocol for creating, modifying, and terminating sessions with one or more participants. These sessions include Internet telephone calls, multimedia distribution, and multimedia conferences." (See Request for Comments: 3261 (RFC 3261 at http://tools.ietf.org/html/rfc3261) from the Internet Engineering Task Force ("IETF") www.ietf.org) SIP can provide a signaling and call setup protocol for IP-based communications able to support at least some of the call processing functions and features of the public switched telephone network ("PSTN") as well as many advanced Web-based features.

Much work has been done on SIP since RFC 3261. See for example the Internet-draft entitled *A Framework for Session Initiation Protocol User Agent Profile Delivery* at http://tools.ietf.org/html/draft-ietf-sipping-config-framework-12 by Petrie et al. ("Petrie"). Petrie describes configuration scenarios for a number of important system architectures (See for example "Simple Deployment Scenario" Section 4.1 of Petrie and "Device supporting multiple users from different Service Providers" Section 4.2 of Petrie). These scenarios are all addressed from the viewpoint and necessary relationships for the end point being configured and simplifying assumptions are made regarding availability of configured network elements to assist in the process.

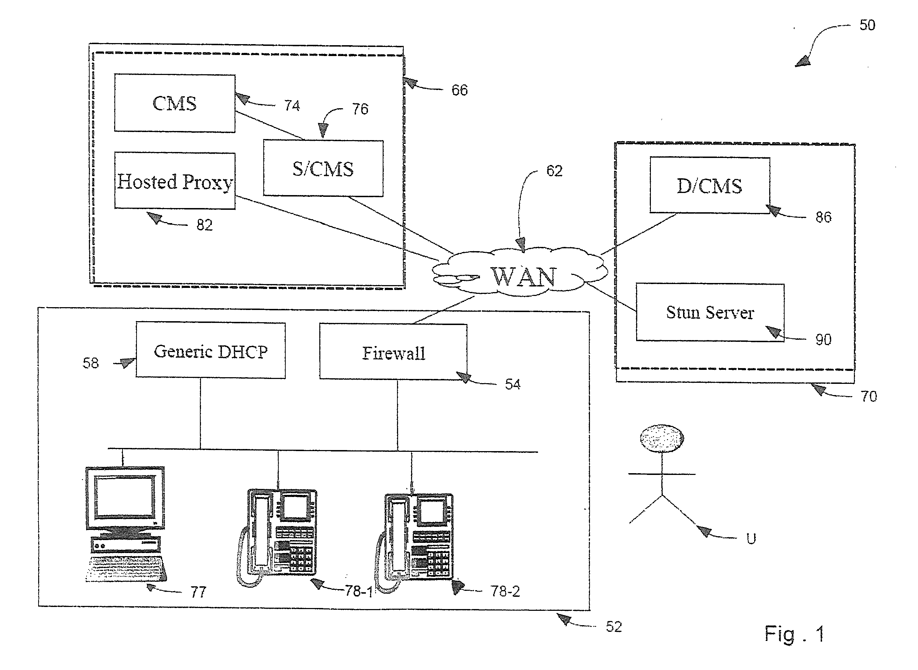

There are many shortcomings to Petrie for at least some applications and environments. Petrie does not discuss necessary relationships between the configuration servers shown in Figure 1 of Petrie and the business entities supplying them. Importantly, Petrie: a) assumes specifically configured network infrastructure in the user's location for the end-user devices (end points) to become configured, b) assumes a prior relationship between the user's network or that of their access provider and either the device provider (i.e. the device vendor) or the service provider (i.e. the provider of the voice or other media communication service), and c) does not allow for end points to be directed to one of many possible service providers based on devices manufactured or distributed by a single device vendor.

Petrie is also not generally suitable for configuration of a Voice over IP ("VoIP") network in a residential or small business establishment, and is not readily applicable to remote and branch office, as well as teleworking scenarios in a larger enterprise. Petrie assumes that the local network is managed by trained personnel, which is something that cannot be assumed for the home or small office market, nor can it be assumed in smaller branch offices of a larger enterprise.

Petrie describes three sources of configuration information as shown in Figure 1 of Petrie. The SIP Service Provider supplies information (feature subscriptions etc) that is specific to the individual user. The Device Provider provides information that is specific to the device. The Local Network Provider provides information that guides the device in the use of the local network. Petrie assumes that the local network is owned by the provider of this information and will set constraints on its use (e.g. bandwidth limitations on a local WiFi hot spot in a coffee shop).

Section 5.1.1.1 of Petrie describes in considerable detail how the device will obtain the required local network configuration profile. This will be obtained from a local Dynamic Host Configuration Protocol ("DHCP") server or through the use of a locally relevant Domain Name Service ("DNS"). The local DHCP and DNS server in Petrie will, in practice, need to be updated by trained personnel. No such personnel can be assumed to exist in the small business, home or small branch office markets.

Section 5.1.1.2 and its subsections of Petrie describe similar processes for obtaining a device configuration profile. Again, assumptions are made regarding the availability of configured network resources to assist in this process that are invalid for small unmanaged network environments or impose significant deployment constraints on their applicability. In the case of device profiles, multiple possible methods are described in Petrie.

In the first method, service provider or device manufacturer pre-configured information is used to locate the device profile server, which is functional, however presumes a pre-existing relationship between the device manufacturer and service provider in order to bring the device fully into service. No such relationship may exist, or multiple such relationships may exist (one device provider to many possible service providers, or many device providers to one service provider), either of which is ambiguous, hence final configuration cannot be immediately completed.

In a second method, it is assumed that a device profile can be located using the local network domain (supplied by DHCP) to locate the device profile server, i.e. the device profile server is in the provided local domain. Either in the local network or in the access network (e.g. the Internet Service Provide ("ISP")), both DHCP and DNS servers would need to be configured to provide correct information for the location of the device profile server. This assumes there is a pre-existing relationship either between the local network administrator and the entity that manages the device profile server (likely the local network is effectively unmanaged in a small network environment), or there is a relationship between the user's access network (e.g. ISP) and that entity - no such relationships can be assumed (i.e. the network access and device maintainer are not in general related to each other in any way).

The third method is manual configuration, which implies some level of user knowledge and interaction, and is not auto-configuration at all.

In general, Petrie is not adequate for the small business and home systems of interest to this specification, and is also not readily applicable to a wide range of branch office and teleworking scenarios in larger enterprises. Petrie assumes that the local network will be of some sophistication. Petrie assumes that the local network has been configured with a domain identifier for example. Petrie assumes that the local DHCP server has been set up to contain this information. Pertinent to this is the implicit assumption that there are personnel responsible for the site that have the skills to set up a DHCP and/or DNS servers in specifically required ways.

Petrie also assumes a pre-existing relationship between local network and the entity which maintains the device profile server, or between the user's access network and that entity. While sometimes viable (e.g. the ISP is also the device maintainer and the voice service provider), these assumptions are not true in the general case (all three entities may be unrelated). Even if such relationships could be set up, they would grow extremely complex and onerous over time, due to the highly distributed, global, and ever changing nature of Internet-based systems.

Further to this, Petrie assumes that the local network is supplied with a SIP proxy server which is able to handle issues with firewall and Network Address Translation ("NAT") in order to make contact with outside SIP facilities. This will also not be true in the general case, particularly in home and small business environments.

In the home and small business situation, none of these assumptions are necessarily valid. The operative assumption is that a naïve user will buy a device (SIP telephone etc.) at a consumer-level store (e.g. big box electronics outlet), or be shipped a generic device by a service provider or device provider, take it home or to the small business, and plug it into their own network. They will expect the device to function as intended without delay and without any training that cannot be obtained from a brief instruction sheet. Any requirement that the user possess or obtain specialized skills will make these devices commercially unattractive.

In addition to the requirements on the local network, Petrie is silent on how the location of the SIP Service provider configuration server is found. It is assumed that this is somehow configured.

A problem addressed by Peterie is the configuration of SIP User Agents (UA) (devices such as IP telephones, softphone clients on PCs etc). Petrie envisages this to be taking place on the LAN within a business or other institution, in residential small networks, or in public "hotspots" and similar. When these devices are first installed, they must be supplied with some initial configuration information. This can include (not limited to): An updated software load; Initial configuration of soft keys and other optional controls and displays and importantly for this specification, the location of the SIP proxy server. Petrie calls this the Discovery and Enrollment phases. The UAs will receive most of their configuration information by use of SIP Subscribe/Notify interactions with the configuration server shown figure 1 of the Petrie draft. The Petrie Draft recommends that this server be given the well-known SIP user id of "_sipuaconfig". They will issue Subscribe messages for their desired configuration and receive them by the corresponding Notification.

This interaction requires that the UAs be aware of the address and port of the Configuration Server. Petrie describes several possible methods including manual loading. However, the method that Petrie foresees as being most commonly used is that of DHCP. DHCP is commonly used to provide UAs with the address of the SIP Proxy server (logically different from and not necessarily the same as the desired configuration server). The port number used on the Proxy server may be added to the DHCP server as an optional extension. With the address of the proxy server, the port number and the well-known user id of the configuration server, the configuration server's SIP URI can be constructed. A similar alternate to this uses DNS lookup, based on DHCP-supplied "local domain", to attempt to locate the desired configuration server in the local domain. With this information the UAs can attempt to interact with the Configuration Server.

The Petrie solution is characterized by:
- Taking place in the LAN environment (behind the firewall and/or NAT) of a single enterprise or institution, or in some other managed environment.
- The local network is prepared for its operation in that the DHCP and DNS servers are configured to supply the proper information and that a configuration server is supplied and properly registered with the locally known SIP proxy.
- There are trained personnel servicing the network. For example, to update the DHCP server with the optional extension including the port address of the

Proxy server and/or DNS entries for the configuration server, and to ensure the configuration server is known to the Proxy server.
- The devices on the LAN have been configured by a single entity (a single vendor such as the local system manager, a value-added reseller or a manufacturer) and as such are adapted to work together.
- If the configuration server is in a foreign network (not the same as the local network), information for the configuration server can be known to the local administration, and can be configured successfully in the local network, or is configured in the access network to which the local network is connected. This assumes a prior arrangement between the local or access network and the network(s) hosting the configuration servers.

There are several drawbacks and limitations to this approach, as discussed above and there are other drawbacks and limitations that will now occur to those skilled in the art.

Current VoIP service providers often use proprietary devices. These solutions are operable on only the networks supplied by these providers. The systems are self-configuring because of this limitation. One deficiency of these systems is that users cannot buy equipment from a provider of their choice and attach it to these networks.

Another problem with the configuration of devices is that a power failure over even a local area can cause large numbers of local networks to fail. At the time of power restoration, this could cause large numbers of devices to almost simultaneously seek reconfiguration. Such a step increase in offered load could overwhelm configuration resources causing delays in service restoration and possibly destabilizing the services and so causing those services to fail.
Figure 1 is a schematic representation of a configurable IP telephony system in accordance with non-limiting embodiments.
Figure 2 is a schematic representation of an IP telephone from the system of Figure 1.
Figure 3 is a schematic representation of a configurable IP telephony system in accordance with non-limiting embodiments.
Figure 4 is a schematic representation of a composite data structure held at an active local configuration server in accordance with non-limiting embodiments.
Figure 5 is a schematic representation of a configurable IP telephony system in accordance with non-limiting embodiments.
Figure 6 is a schematic representation of a composite data structure held at an active local configuration server in accordance with non-limiting embodiments.
Figure 7 is a schematic representation of a computing environment in accordance with non-limiting embodiments.

This specification describes the dynamic configuration of SIP end points although there is nothing in the specification that precludes the same techniques from being used for the configuration of other types of devices or using other network technologies.

This specification discusses a system architecture that Petrie does not discuss and necessary relationships between the configuration servers shown in Figure 1 of Petrie and the business entities supplying them. Importantly, the present specification does not assume configured network infrastructure in the users location to become configured, does not assume any prior relationship between the user's network or their access provider and either the device provider or the service provider, and allows for end points to be directed to one of many possible service providers based on devices manufactured or distributed by a single device vendor.

This specification describes the configuration of a VoIP network in a residential or small business establishment, and is also readily applicable to remote and branch office, as well as teleworking scenarios in a larger enterprise.

The same techniques described here may also be readily applicable to a wide range of larger enterprise market, wishing to reduce their administrative overhead or use a hosted VoIP service rather than a service they maintain themselves.

Although the emphasis in this specification is on the small business and home market, the teaching herein can also be useful for branch office and teleworker applications in large enterprise applications. Devices can be configured on local networks in branch office and home locations that are not normally serviced by trained personnel from these large enterprises. The devices can be directed to connect to the enterprise network in the same manner as described for the connection to the service provider networks for small business and home applications. The business relationships for this case may be between the owning large enterprise and the device supplier. The device supplier may be the device manufacture or a representative, or may be an organization within the enterprise. They will be directly analogous to the business relationships described between the device provider and service provider. Server interactions can be the same in both cases.

The present specification describes how SIP telephones and other devices can be configured on local networks by naive users, without specific network preparation. A user could buy a generic device at a general-purpose store, or alternatively have it shipped to them. The device may come from a vendor or a retailer, neither of which may have any obvious relationship with the SIP service provider. This specification describes a business relationship and methods that will allow the device to access the desired service provider user and device profile configuration server(s) without requiring onerous tasks on the part of the user.

This specification addresses the issue of the configuration of service for a residential or small business environment. Often times there are no trained personnel available who can set up a local DHCP or DNS servers to allow for the configuration of SIP devices in connection with external device configuration services such as the device vendor or representative and/or service provider service plans. This specification describes methods by which device configuration can be accomplished automatically with minimal user intervention. The specification supplants the standard SIP configuration as described in Petrie.

In one embodiment, this specification envisages a local SIP network set up by peer to peer methods. Taken in conjunction with Petrie, this vision solves the issue of how a SIP proxy can be elected before it is configured. Petrie assumes a functioning SIP proxy and peer to peer networks elect SIP proxies as one of their advantages. The methods described in this specification can allow the creation of peer to peer SIP systems on previously unprepared local networks.

The present specification also provides a system for the configuration of multiple devices on a local network. The system can permit configuration by unskilled personnel. The configuration is resilient in that the devices can cooperate to preserve configurations for devices which are temporarily removed. The system includes a local configuration server which will restore the configuration of previously configured devices as they return to the network, or assist newly connected devices in obtaining initial configuration. The local configuration server can be a component of an already existing end user device, or can be a separate entity, and can be elected from the set of all so capable devices present in the network. The currently active local configuration server can be configured to distribute current data to other devices capable of serving as the local configuration server in the network, for resiliency, in case of failure or disconnection and to allow for a new device to be elected. For resiliency across power failures and other causes of local network failure, a network-based aggregator is also described. Local configuration servers can register their configurations of all network devices on the aggregator. The aggregator can restore these configurations to the relevant local configuration server on recovery from local network failures. With this capability, the aggregator can provide a path whereby network-based configuration servers can mange configurations on all devices.

The computing environment can be configured to obtain new user-associated feature set data from a user configuration management server connected to the wide area network when new log-in data is received that is not stored in the configuration profile. The computing environment can also be configured to store the new user-associated feature set data in association with the new log-in data. The computing environment can also be configured to transmit the new user-associated feature set data to the local configuration management server for storage and distribution to the other end-user devices. The computing environment can be configured to delete a given user-associated feature set if the associated respective log-in data is not received within a given time period.

Referring now to Figure 1, a configurable IP telephony system in accordance with an embodiment is indicated generally at 50. System 50 includes a network 52 such as a small business computing network or a home computing network. Network 52 is generally serviced by a generic firewall/NAT 54 and a DHCP server 58. Firewall/NAT 54 is in turn connected to a wide area network (WAN) 62 such as the Internet or a larger enterprise network. WAN 62 provides a point of interconnection for various network components from a service provider 66 and a device provider 70.

Network 52 comprises a plurality of devices that connect thereto, which in a present embodiment comprise at least one computer 77 and at least one IP telephone 78-1, 78-2 (Collectively IP telephones 78 and generically IP telephone 78). Computer 77 and IP telephones 78 connect to WAN 62 via DHCP 58 and firewall 54, and accordingly, computer 77 and telephones 78 are able to interact with hardware connected to WAN 62 including hardware associated with service provider 66 and device provider 70.

Service provider 66 acts as the service provider for network 52 and includes all of the appropriate necessary and/or infrastructure therefor, including, but not limited to a configuration management server ("CMS") 74 which connects to WAN 62 through a Service Provider CMS ("S/CMS") 76. Service provider 66 also includes a hosted proxy 82 that connects directly to WAN 62.

Device provider 70 assists in the provisioning of IP telephones 78 as they are connected to network 52, and includes a Device Configuration Management Server 86 ("D/CMS") and a STUN server 90 both of which connect directly to WAN 62. The structure and function of STUN server 90 can be understood by reference to Request for Comments 3489 ("RFC 3489"), entitled *Simple Traversal of User Datagram Protocol (UDP) Through Network Address Translators (NATs)* found at http://www.ietf.org/rfc/rfc3489.txt and incorporated herein by reference.

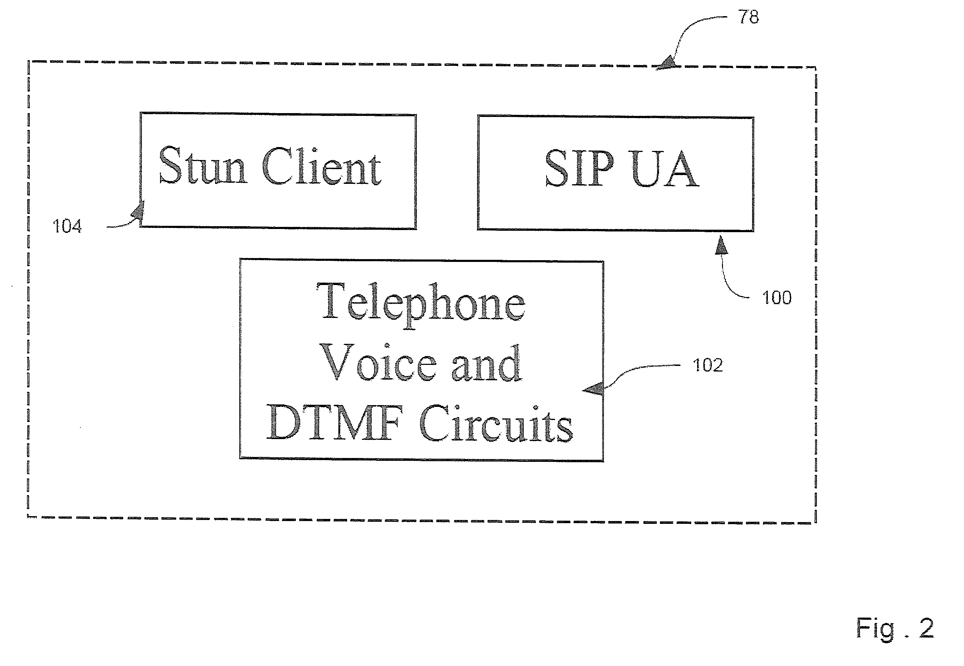

A user U is associated with network 52. User U, it is assumed, does not have the knowledge to customize the operation of either the DHCP server 58 or the firewall/NAT 54 or in preparing network 52 in any significant way. It is assumed that user U, has purchased a device, such as telephone 78-2 at a consumer electronics store, or possibly it has been shipped to them by some means. It is assumed that user U intends to connect telephone 78-2 to network 52 and expects to be able to make telephone calls using telephone 78-2. As shown in Figure 2, telephone 78 contains among other things a SIP user agent (UA) 100 and a STUN client 104. (Again, see RFC3489 where STUN is discussed as a protocol that is intended to deal with the issues of NAT traversal for SIP and other protocols.) Telephone 78 also includes a standard suite of telephony circuits 102 to manage voice and/or dual-tone-multi-frequency ("DTMF") tones and the like.

It should be noted that the teachings herein are not limited to telephone 78 and that there can be a wide variety of devices that can be purchased with SIP capability. (Indeed, the teachings herein are also applicable to computer 77 which can run software to emulate telephone 78). At a minimum, telephones can range from simple telephone sets to larger telephone handsets with large display and full keyboards. These varying capabilities affect the methods whereby configuration data can be obtained or entered by the user. However, as a minimum, these telephone are able to make voice telephone calls and will contain some method of DTMF signaling (keyboard or otherwise). For this specification, the minimum device capability will be assumed.

At this point it is to be clarified that the present teachings reflect a specific embodiment. SIP is a non-limiting example of a protocol -- the protocol does not need to be SIP, it is just a current example used in the present embodiment. Further, the device does not need to be telephone 78, the device can be any device that needs auto-configuration by untrained users and which communicates across a WAN such as the Internet (e.g. VoIP Gateway, Media Server, IVR, network game device, entertainment device such as IPTV, medical monitoring, security systems and the like).

For purposes of configuration, the manufacturer of telephone 78 will have equipped telephone 78 with a bootstrap program that will function automatically as much as possible. Telephone 78 will also be supplied with a unique identifier (device id). This could be, for example, its Institute of Electrical and Electronic Engineers ("IEEE") 802 Media Access Control address ("MAC") address or the like.

When telephone 78 is first powered up and connected on local area network associated with network 52, telephone 78 will detect that it has not been configured. To support configuration, the manufacturer (which may or may not be device provider 70 itself) of telephone 78 has equipped telephone 78 with a bootstrap program and has pre-configured the addresses on WAN 62 (e.g. Uniform Resource Identifier ("URI")) for D/CMS 86 and, optionally, STUN server 90. (Of note, STUN server 90 is only needed to support configuration scenarios where NAT devices are imposed - if the device is already using a routable IP address directly, the STUN client and server are unnecessary). On power up, telephone 78 will have been supplied a locally significant IP address from a generic DHCP server 58 in the standard well-known way. The bootstrap program will use this local IP address with STUN client 104 to contact STUN server 90 and obtain the globally significant IP address and port that is being supplied to it by Firewall/NAT 54. The bootstrap program will then combine the device id of telephone 78 with the supplied NAT address and port to form an effective SIP URI unique to telephone 78. It will use this SIP URI as its SIP FROM and CONTACT addresses to issue a SUBCRIBE message to the D/CMS server 86 for the current device configuration files. This SUBSCRIBE request will be addressed to the pre-configured D/CMS 86 URI, using the SIP To: field, and can be sent directly to the D/CMS 86, possibly via DNS lookup. Optionally, the URI of D/CMS 86 may correspond to an inbound SIP Proxy server in the device provider's network (not shown) to which SIP signaling (Subscribe/Notify, SIP calls etc) from telephone 78 can be directed and routed via normal SIP processing once in that destination network.

The D/CMS 86 can be configured to ascertain the required configuration files respective to telephone 78 by linking the device id of telephone 78 to the model type and appropriate revision. D/CMS 86 can then supply the required configuration files in a responding Notification message back to the telephone 78. The subscription can remain open and any updates to telephone 78 configuration can be supplied in subsequent Notification messages.

Device provider 70 of telephone 78 can optionally supply telephone 78 with necessary information about a subscription available from service provider 66 depending on the business relationship between the vendor of telephone 78 and service provider 66. There are several cases.

### A) No Business Relationship

This case is similar to the scenario described in Petrie. In this case device provider 70 can offer no help and service provider 66 will supply instructions to the user as to how to contact S/CMS 76.

### B) Pre-arranged Device Registration

### i) Location Pre-Configuration

A relationship can be established so that the vendor (not shown) of telephone 78 and service provider 66 have previously arranged to have telephone 78 sold in association with a particular offering from service provider 66. For example, telephone 78 can be sold in service provider packaging with an associated plan.

In this type of situation, device provider 70 can supply the required addresses of the S/CMS 76 as part of pre-configuration of telephone 78. In this situation, telephone 78 will contact S/CMS 76 in the same way that telephone 78 connected the D/CMS 86 and receive any necessary information. Such pre-configuration can be done at time of manufacture, as a pre-shipping configuration step, or as some other post-manufacturing process.

Either the device provider 70 or service provider 66 can then arrange so that telephones such as telephone 78 are provided to user U (and or other users like user U with networks like network 52) that are specifically pre-configured with the address of S/CMS 76 corresponding to specific service provider 66, possibly through store visit from the customer or by direct shipping.

Alternatively, the D/CMS 86 can fulfill the role of the S/CMS 76 and directly supply the configuration files to telephone 78 corresponding to those that otherwise would have been supplied by service provider 66. D/CMS 86 can then have been configured to hold the required configuration information for service provider 66. As a further alternative, D/CMS 86 can act as a relay between telephone 78 and S/CMS 76. In both of these cases, the same configuration as previously-discussed can be used, with the exception that the location of the D/CMS server 86 is configured instead of S/CMS 76 associated with service provider 66.

### C) Pre-registered telephone IDs

As an alternative to placing the address of S/CMS 76 in the pre-configuration files of telephone 78, device provider 70 and service provider 66 can pre-register the device id of each telephone 78 that is to be used in a service offering. Either device provider 70 or service provider 66 then arranges to provide user U (and other users like user U) with telephones 78 that are specifically pre-configured with one of these previously known device ids, corresponding to the specific service plan and user U, possibly through store visit from the customer or by direct shipping.

Such pre-registration can be done in blocks of device ids or as groups of individual device ids. When telephone 78 contacts D/CMS 86, the device id of telephone 78 can indicate the service provider and service offering that is to be supplied. As in the previous example, D/CMS 86 can either supply the location of the S/CMS 76 to telephone 78 or perform the function of accessing of S/CMS 76 itself depending on the relationship between the device provider 70 and service provider 66. In the former case, the URI for the S/CMS 76 can be returned as part of the profile data for telephone 78.

### D) User-registered Device IDs

Another possible business relationship is one in which user U pre-registers the device id of telephone 78. User U obtains telephone 78 from device provider 70. The device id will be available to user U in a ready manner. It can be printed on telephone 78, on the packaging, on an instruction sheet etc. User U will contact service provider 66 to obtain a service plan. As part of this process, service provider 66 will request the device id and name of device provider 70. Service provider 66 will then contact the device provider 70 to register the device id against the service plan. The registration of telephone 78 can then be performed as described above in the pre-registered device id section. As in the previous examples, the D/CMS 86 can either supply the location of the S/CMS 76 to the device or perform the S/CMS 76 function itself depending on the relationship between device provider 70 and the service provider 66. In the former case, the URI for S/CMS 76 can be returned as part of the device configuration profile data.

### E) Service Provider Registered Device IDs

Another alternative business relationship is driven by initial user contact with service provider 66. User U will contact service provider 66 directly to arrange a service plan. Service provider 66 allocates and configures a device id corresponding to user U and telephone 78, and provides this device id to user U for entry at an initial configuration time. The device id can be provided to the user in a number of ways, such as by e-mail, by telephone contact, letter mail, directly due to customer visit, etc. The device id is formatted such that it can uniquely identify service provider 66 to the D/CMS 86. (Note that it is not necessary for device provider 70 to be able to derive the specific service plan and user, only the correct service provider 66). User U can optionally have previously purchased the device from device provider 70, at a retail outlet, or by other means. Or, service provider 66 may arrange to provide telephone 78 to user U, for example by shipping or due to customer visit to a service provider outlet. The service provider 66 will then contact the device provider 70 to register the device id against the service plan, or the device id may be selected from a previously arranged group of ids already enabled for that service provider at the device provider D/CMS. At initial device configuration, user U is asked to enter their device id into a user interface, and it is then used along with the pre-configured location of D/CMS 86 to create a SIP URI to be used in contact with D/CMS 86, which can then be mapped to service provider 66. As in the previous examples, D/CMS 86 can either supply the location of the S/CMS 74 to telephone 78 or perform the S/CMS function itself depending on the relationship between device provider 70 and service provider 66. In the former case, the URI for the S/CMS 76 can be returned as part of the device configuration profile data.

The device id may be stored in a non-volatile memory in telephone 78 so that telephone 78 can identify itself automatically for later operations in event of power interruption due to disconnect, power failure, reboot, and so on. User U will not be required to remember the device id.

### F) User Service Registration at Device Configuration Time

Another possible method of performing service registration is to request user U to do so at the time of configuration of telephone 78. Depending on the type of telephone 78, there are multiple methods by which interaction with user U can be effected.

As described above, SIP addresses (from STUN server 90 or other NAT traversal process) are exchanged during configuration of telephone 78 to allow for the subscription/notification process. The possession of these addresses can allow interactions with user U to obtain information about the service plan that they have selected or to assist them in selecting a service plan.

For the simplest version of telephone 78, which will lack displays and full keyboard, a voice connection can be set up between telephone 78 and the D/CMS 86. Such a voice connection can be effected using standard SIP methods, or similar. Either D/CMS 86 or telephone 78 can be configured to initiate the connection at time of initial configuration contact with the D/CMS 86.

At the time of registration of telephone 78, telephone 78 will ring (or alert in some other way) and when user U answers, he/she will be prompted with questions in a voice dialogue for information required to complete service registration. This dialogue may be with a human service representative, or may be via an automated server for example an interactive voice response ("IVR") system. User U can be prompted to reply either with DTMF or by voice if D/CMS 86 is equipped with an automatic speech recognition device.

For more capable telephones 78 with displays and keyboards, (perhaps even computer 77) the service registration dialogue can be accomplished by the exchange of forms. These can be passed back and forth between telephone 78 and D/CMS 86 for example by use of SIP Message messages in the same manner as an instant messaging exchange, or may be via Web access using hyper text markup language ("HTML"), or other means.

Mixed mode text and voice negotiations are also possible. D/CMS 86 can send lists of options as text to the display of telephone 78 and accept replies in either text or voice. For such a method, both a voice and text connection can be set up between telephone 78 and the D/CMS 86.

For this method, user U can have already registered for a service plan or may request assistance in the selection of a service provider and plan. The dialogue can initially ask user U if they have registered for a plan and if so the service provider identity and a registration number supplied to user U as in the previous method. If user U requests assistance in selecting a plan, the dialogue can provide information on plans from service providers that the device provider 70 has business relationships with. This can be done by D/CMS 86 exclusively or in cooperation by D/CMS 86 and/or other servers supplied by the various service providers. When the service provider and plan have been selected, service configuration can be performed in the manner described in the previous sections. This can be done by D/CMS 86 itself or D/CMS 86 can supply telephone 78 with the location of S/CMS 76 of the selected service provider 66.

### Handoff of Configuration Service

In any of the foregoing methods, it is possible for the ongoing maintenance of the profile data for telephone 78 to be provided by service provider 66, rather than being effected by the device provider 70. This is useful to service provider 66 in order to maintain a more complete service. It can also be useful to device provider 70, since it allows for the latest software to be loaded, license checking, inventory management, and other functions, yet it offloads the ongoing maintenance of the actual profile data of telephone 78, which could become very large.

Upon initial connection with D/CMS 86, telephone 78 can be provided with initial configuration corresponding to that specific telephone 78 (e.g. initial / updated software load, device profile containing default key configurations, generic service settings, etc). After all telephone-specific generic configuration has been accomplished (which may take more than one Subscribe / Notify cycle to complete), the current D/CMS 86 can issue a profile updating Notify to telephone 78 which contains the location of a different instance of a D/CMS (not shown) other than D/CMS 86, which may be maintained by the service provider (such as, for example, service provider 66, in a D/CMS that is maintained by service provider 66) or maintained by some other 3^{rd} party entity, and may or may not be resident on the same physical server as S/CMS 76. Based on this change, telephone 78 can drop the existing subscription to the current D/CMS 86, and then subscribe to the different instance of the D/CMS. Future Subscribe operations for that profile of telephone 78 could then be directed to the different instance of the D/CMS, based on stored data (e.g. the URI of service provider's D/CMS, which may be same as same as S/CMS 76) held in telephone 78. Should a previously handed-off telephone 78 re-arrive at the original D/CMS 86 for some reason, that telephone 78 would be handed-off again in the same manner.

After handoff and subscription to different instance of the D/CMS, any locally generated changes to the profile data (e.g. user re-programs a key etc) of telephone 78 can then be pushed up to the different instance of the D/CMS by well known means (e.g. via HTTPS or similar), and update the copy of the profile data that is held by different instance of the D/CMS for later retrieval. The different instance of the D/CMS does not need specific awareness of the meaning of this data, since it is specific to telephone 78 and is specified by telephone 78, so the updates can be treated transparently. There may be reasons why the service provider does want to have access to this data and/or be able to apply policy to its use - this is not prohibited, but would require specific handling.

### Service Provider Specific Customization

In any of the above methods, since the device id is known to the device provider 70, and can be mapped to the specific service provider 66, device provider 70 can provide content specific to that service provider 66. For example, device provider 70 may maintain different customized software for different service providers other than or including service provider 66, or different profiles for telephone 78 with different default key maps, directory entries, or similar.

### Data Exchanges Between Device and Service Providers

The above-described service implies commercial agreements and systems interfacing between device provider 70 and service providers 66. If a device provider 70 directs a device to a service provider 66, device provider 70 may expect to receive consideration, perhaps in the form of payment, be paid for the referral. To receive consideration, a method can be effected whereby device provider 70 can identify telephone 78 that has been provided with this service that cannot be repudiated by service provider 66, since device provider 70 and service providers 66 need to exchange information, including the device ids, between their systems. The relationships may be many-to-one (i.e. one device provider 70 can may have arrangements with one or more different service providers 66, and a service provider may also have arrangements with one or more different device providers 66). There are several methods by which the foregoing can be accomplished.
A) For the cases in which device provider 70 operates an CMS (such as D/CMS 86 or even S/CMS 76 itself) on behalf of service provider 66, or acts as relay in the interactions between the S/CMS 76 and telephone 78, the negotiation can be set up so that the CMS being operated by device provider 70 can extract a service plan identifier from S/CMS 76. This could be done for example using an HTTPS or similar well known means, with device provider 70 sending the device id of telephone 78 to be mapped to S/CMS 76, with service provider 66 returning the corresponding service instance id for that device and corresponding user service plan and profile data corresponding to user U. Telephone device id and service instance id can be crafted for example with encryption hash or other technology so that they can only have been created by the device provider 70 to service provider 66, respectively. For example, the device id could be a hash of the device MAC Address, and the service id could be a hash of the user's SIP Address of Record ("AOR"). These encrypted ids can act as the non-repudiateable id set for billing purposes.
B) Another case is one in which device provider 70 will expect service provider 66 to supply device provider 70 with the non-repudiateable id. This is exemplified by the "Service Provider Registered Device IDs" and "User-registered Device IDs" scenarios previously-described. After the configuration process at S/CMS 76, service provider 66 can indicate to device provider 70 that a telephone 78 with a specific device id has been configured and validated. The device id can be formed using the encryption techniques above. The data exchange in this case would be initiated by service provider 66 and can use well known means such as HTTPS, providing the validated device id to D/CMS 86, with D/CMS 86 returning a confirmation id. D/CMS 86 can then permit the specific device id to be configured and come into service as previously-described.
C) As a variation on the above case, service provider 66 can pre-validate a range of device ids that device provider 70 can then allow to be configured and go into service. This could use the same exchange between systems associated with service provider 66 and device provider 70, with the difference that multiple device ids are provided.
D) Another case is one in which service provider 66 can expect device provider 70 to supply service provider 66 with the non-repudiateable id. This is exemplified by the "User Service Registration at Device Configuration Time" scenario described previously. After the configuration process at the D/CMS 86, device provider 70 can indicate to service provider 66 that a telephone 78 with a specific device id has been configured and validated against a particular service id. The device id and service id can be formed using the encryption techniques above. The data exchange in this case would be initiated by device provider 70 and can use well known means such as HTTPS, providing the validated device id and service id to S/CMS 76, with S/CMS 76 returning a confirmation id. Additional information regarding the specific user can also be transferred to service provider 66 at this time, such as the user's SIP AOR, any preferences, and specific service plan selected. D/CMS 86 can then allow the specific device id to be configured, and S/CMS 76 can allow the specific user corresponding to the service id to be configured and come into service as previously described.
E) As a variation on the above case, device provider 70 can pre-validate a range of service ids that service provider 66 can then allow to be configured and go into service. This could use the same exchange between systems respective to device provider 70 and service provider 66, with the difference that multiple service ids are provided.

To enforce the above cases, the entity operating the CMS (either device provider 70 or service provider 66) has the capability of disabling telephones 78 for which that entity has received no proof of valid service-provider and/or device provider configuration, or which otherwise appear to be invalid. The relevant CMS has the capability of updating the configuration of the telephone 78. This is normally done to update profile data, correct device software bugs, etc. However, the CMS can issue configuration that will disable the telephone 78, or simply refuse to provide initial software load or any configuration at all. Optionally, depending on the specific inter-provider interactions, a timeout can be set after telephone 78 receives its device configuration. If no non-repudiateable id is received during that timeout, a configuration can be issued to disable the telephone 78.

### Use of HTTP

The previous sections have described the registration process as being accomplished with the SIP Subscription/Notification capability. There are multiple advantages to this process. Firstly telephone 78 can use SIP as part of its normal function and so will have that capability as a default. Secondly, the use of a permanent subscription can allow either D/CMS 86 or S/CMS 76 to update telephone 78 at any time required. There is no need for telephone 78 to poll the relevant CMS (i.e. D/CMS 86 or S/CMS 76). With large numbers of telephones 78 (or computers 77), this could present a significant problem with scalability. Also as indicated above, the SIP process can have difficulty with NAT traversal. HTTP will have no difficulty with NAT traversal. However HTTP does not have a Subscription/Notification possibility. The processes described above are possible using HTTP instead of SIP, if telephone 78 will periodically poll the configuration servers for any required updates. The dialog process described above may be done by HTTP with the exchange of HTML forms and the voice dialog may be accomplished, as one example, by the use of specialized applets or other well known means. Other protocols beyond SIP or HTTP are also feasible.

### Security and Encryption

It is understood that it can be desirable for privacy and security reasons to encrypt the configuration procedures. Both SIP and HTTP provide well-known mechanisms of encryption for both secrecy and validation for both control and media streams. These well-known mechanisms can be used for this purpose.

It should now be understood that the each of the components in system 50 can be implemented using a computing environment with suitable computing resources for implementing the functions as described herein. Such a computing environment, would, of course, include an appropriate configuration of central processing unit(s), random access memory and/or other volatile storage, read only memory and/or hard disc drives and/or other non-volatile storage, network interfaces, input devices (e.g. keyboards, pointing devices, microphones etc), output devices (e.g. speakers, displays) all interconnected via a bus. Appropriate operating systems, computing languages and computing software round out such computing environments to provide the computing devices to implement those components. Various known and/or future contemplated hardware computing platforms can provide a basis for these environments.

The foregoing embodiment teaches configuration and operation of devices on a local network. However, in an another embodiment there is provided the devices on the local network can be aware of each other and cooperate in providing services, such as configuration, with and for each other. Additionally, an aggregator function can also be added that allows the configuration information to be preserved across power and other causes of local network failure. The aggregator can also allow network-based management systems of the service provider and device manufacturer to identify single devices or single classes of devices for the management of their configurations, in order to make mass management changes in profile data affecting large numbers of devices or the users of those devices. The aggregator can optionally be configured to be accessible and/or configurable via a web interface and/or a local programming interface.

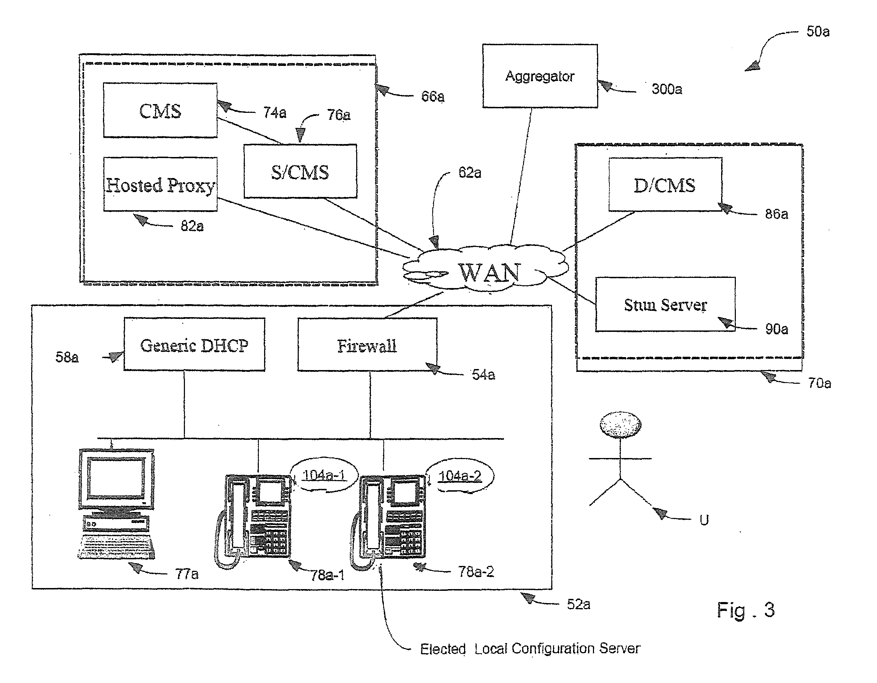

Referring now to Figure 3, this other embodiment is shown in greater detail. Figure 3, shows a configurable IP telephony system in accordance with another embodiment which is indicated generally at 50a. System 50a shares many of the same components as system 50, and accordingly, like components in system 50a share like reference characters to counterparts in system 50, except followed by the suffix "a". Of note, system 50a includes an aggregator 300a, which will be discussed in greater detail below. Also, in system 50a, devices 78a substitute for devices 78 in system 50. Devices 78a include substantially the same functionality as devices 78 in system 50, and also include a local configuration server component 104a incorporated into the other components shown in Figure 2. However, device 77a does not include a local configuration server component, although in other embodiments device 77a could include this component. Local configuration server component 104a can optionally be configured to be accessible and/or configurable via a web interface and/or a local programming interface.

Local configuration server component 104a is configured to provide a service to the other devices 77, 78 on network 52a whereby devices 77, 78 can store their configuration data on for later recovery. As a more specific example, while both device 78-1 and device 78-2 will each include, in this embodiment, a local configuration server component 104a, in the present example only the local configuration server component 104a-2 on device 78a-2 will be "elected", such that local configuration server component 104a-2 will be "active", and local configuration server component 104a-1 will be inactive. (Although in certain circumstances the opposite state can exist.) Also note that only one device 78a need actually include a local configuration server component 104a, although robustness and flexibility is provided if more than one device includes the possibility of functioning as the active local configuration server component 104a. Also note that in the present example where local configuration server component 104a-2 is active, then device 78a-2 acts a local configuration server on behalf of itself, as well as on behalf of devices 78a-1 and device 77a.

Where devices 77a, 78a are disconnected from the network and later reconnected, user U can have the ability to customize the configuration of his/her device 77a, 78a to optimize its operation for his/her particular purposes. This ability can involve the configuration of speed dial buttons, the customization of the display, contact lists, etc. If user U disconnects his/her device while changing offices or even just rearranging their desk, or if the device 77a, 78a is mobile and disconnects while out of range of the local network, he/she may want and expect these configurations to be preserved and be presented when the device 77a, 78a is reconnected. If there are updates to profile data during disconnection, for administrative or other reasons, then the profile data can be updated when the device 77a, 78a reconnects. This situation can be even more common in the case of wireless devices. When a user with a wireless device (cordless, dual mode cellular telephone, etc.) reestablishes contact with the local network 52 after being absent, then that user can desire and expect that their local configurations be reestablished automatically.

This functionality can be provided by, for example, a publish / subscribe / notify service in accordance with SIP. Initial configuration can, for example, be provided by methods described in relation to system 50. Configuration information can be stored in a data structure within each device. Using the standard SIP Publish mechanism as described in *Session Initiation Protocol (SIP) Extension for Event State Publication,* Niemi, Request for Comments RFC3903, as promulgated by The Internet Engineering Task Force (http://www.ietf.org/rfc/rfc3903.txt), incorporated herein by reference, or similar, each device 77a, 78a can register their configuration data with the currently active local configuration server component 104a-2. Those devices 77a, 78a can also subscribe to local configuration server component 104a-2 for the configuration information of network 52, for example using standard SIP Subscribe/Notify as described in *Session Initiation Protocol (SIP) Specific Event Notification,* Roach, Request for Comments RFC3265 as promulgated by The Internet Engineering Task Force (http://www.ietf.org/rfc/rfc3265.txt) described in relation to system 50. Each device 77a, 78a can identify its own configuration information using a unique device id associated with that device 77a, 78a (for example, media access control ("MAC") address etc.) as described in relation to system 50. The active local configuration server component 104a-2, in turn, will consolidate the configuration information from all devices 77a, 78a reporting to the active local configuration server component 104a-2 in a composite data structure. A composite contains data structure that contains data for all participating devices as opposed to a data structure for a single device that will include all devices 77a, 78a on network 52a.

As configurations of the devices 77a, 78a are customized, the composite configuration data structure on the active local configuration server component 104a-2 will be updated. The active local configuration server component 104a-2 will notify all of the other devices having a local configuration server component 104a (in this example, device 78a-1 and not device 77a) with this composite data structure periodically, on any change or possibly when a significant number of changes are made. Thus devices 78a on network 52a are capable of having the composite configuration data structure and thus are potentially capable of functioning as the local configuration server should the active local configuration server component 104a-2 fail or device 78a-2 be disconnected altogether. At least one device is capable of performing as the active local configuration server, and resiliency is provided if more than one device has a location configuration server component 104a. However, as previously discussed, not all devices would need to support the local configuration server function in a given network.

It need not be assumed that a specific device having a local configuration server component 104a will be provided on network 52a. Rather, the function of local configuration server component 104a may be supported as a sub function of already existing communication or other user devices. Using Peer-to-Peer techniques the currently active local configuration server component 104a can be selected by an election process from all of the devices 78a on network 52a that are capable of performing that function. Each intrinsically capable device 78a can generate a metric which will indicate its specific capacity to perform this function. These will be compared and the most capable device will assume the role. Such techniques are known, for example as described in *A Hierarchical P2P-SIP Architecture draft-ship2psip-hier-arch-00*, Shi et al, SIPPING Working Group, Internet-Draft, as promulgated by The Internet Engineering Task Force (http://tools.ietf.org/id/draft-shi-p2psip-hier-arch-00.txt), and incorporated herein by reference. Further examples of such techniques are provided later in this specification.

It should be noted that local configuration server component 104a need not be incorporated into device 78a but can be incorporated into a separate specialized server that is expressly for the purpose of functioning as local configuration server component 104a. In the case that one or more separate, specialized servers is provided for the function of local configuration server component 104a, or are included with services provided by other non-user devices, then these servers could either be specifically configured or undergo the same election process as described above. It is also possible to mix special purpose servers supporting the function of local configuration server component 104a with user devices also supporting the function of local configuration server component 104a using the same techniques as described above.

As shown in Figure 3, the aggregator 300a can also be included. Aggregator 300a is a server situated outside of network 52a on the wide area network 62a. In other embodiments aggregator 300a could be situated elsewhere, such as within network 52a. In general, aggregator 300a is situated where it is accessible to those devices and/or networks and/or servers that can benefit from accessing it. Aggregator 300a is configured to act as a repository for local network configuration data that have been consolidated by one or more local configuration server component(s) 104a. Aggregator 300a can thus be configured to have various functions.

For one example function, aggregator 300a acts to preserve the consolidated local configuration data across local network 52a in the event of a complete failure of network 52a, including power failures. With this function, aggregator 300a can shield D/CMS 86a and S/SCMS 76a from the mass requests for configuration that will follow power failures affecting large numbers of local networks like 52a.

For another example function, aggregator 300a is also a means whereby the network management systems of the service provider 66a and device provider 70a can access single devices 77a, 78a, or collections/classes of devices and manage all aspects of their configurations. This can enhance the ability of providers 66a and/or 70a to propagate mass changes to related collection of devices 77a, 78a, without the need to directly inspect the properties of each device 77a, 78a directly.

Useful diagnostic and data mining information can also be derived regarding user preference behavior, device configuration preferences and other by examination of the configurations stored in aggregator 300a. Service and device providers can determine which programmable options that users are configuring and relate that information to types and locations of users, etc. This information will be of significant utility in the design of new devices and services. This will allow direct access to information that previously could only be obtained by laborious and costly survey techniques.

There are various operational modes of system 50a. Take the example of a device being installed into a running network. This example, assumes that device 78a-1 is being installed into a running network 52a where device 78a-2 and device 77a are already running. Further, assume that local configuration server component 104a-2 has been elected and is functional, which occurred when either device 78a-2 was first installed into network 52a or when device 78a-2 was being reinstalled after previously being configured and licensed. In this example, device 78a-1 will power up as described in relation to system 50. However instead of immediately seeking out D/CMS 86a or S/CMS 76a, device 78a-1 will emit a broadcast message on network 52a looking for the active local configuration server component 104a. Local configuration server component 104a-2 will see this message will reply with a message informing device 78a-2 of its IP address and the port to be used for configuration subscription and registration. Device 78a-1 will then subscribe to local configuration server component 104a-2 for the local network configuration information in the standard SIP manner as described in the SIP Subscribe RFCs, previously cited.

Alternatives to the LAN broadcast message are also possible, for example use of IP Anycast defined to route to the topologically closest local configuration server component 104a, or IP Multicast to a configuration group. Anycast is a technique whereby a message is addressed not to a specific device but to one of a number of devices that will perform a specific function. The LCS function in this case. The routers in a network will be programmed with the locations of these devices and will route Anycast messages to the nearest one. In this example, the router will route the message to the LCS. This information will have been supplied to the router as part of the LCS election process. In Multicast, routers are programmed to route messages to a Multicast address to the individual addresses supplied in a Multicast list. So in this example, each device of interest to this specification, as it is configured on the local network will have this address added to the Multicast list. The Anycast and Multicast techniques may be inefficient for the local network case used in these examples. However, if these techniques are desired to be used for configuration of groups of devices that are situated across wider routed networks, then these techniques may apply. With Anycast or Multicast, the techniques described here can be extended to these wider networks.

On the successful completion of the subscription of device 78a-1, the local configuration server component 104a-1 will issue a SIP Notification to device 78-2, which contains the local composite configuration data structure. This will contain the configuration information of all devices 77a, 78a that currently registered to the active local configuration server component 104a-2 as operating on network 52a. Device 78a-1 will examine the composite data structure in local configuration server component 104a-2 for a configuration for device 78a-1 that is identified with the unique device id for device 78a-1. Device 78a-1 can then configure itself based on this information, and become operational.

As discussed above there are various operational modes of system 50a. As another example, assume that devices 77a and 78a are already running. On reception of the composite data structure notification, a previously-configured device will find a configuration listed for its own unique device id. It will accept this as its own, load it and begin operation. This will occur for devices that have been temporarily removed from the network and restored. If profile information has changed while the device was disconnected, due to administration, indirect user configuration (e.g. Web based configuration change), these changes will be reflected in the retrieved data and take effect.

As discussed above there are various operational modes of system 50a. As another example, a device that has not been previously configured may connect to a network. Assume again that device 78a-1 is being connected to network 52a and that device 77a and device 78a-2 are already connected, with local configuration server 104a-2 being active. On reception of the composite data structure notification from location configuration server 104a-2 at device 78a-1, and if device 78a-1 does not find a configuration identified with its own unique device id, then device 78a-1 will assume that device 78a-1 has not previously been registered with its configuration data with location configuration server 104a-2. Device 78a-1 will then request its configuration from S/CMS 76a and/or D/CMS 86a as described in relation to system 50 and begin normal operation.

As discussed above there are various operational modes of system 50a. As another example, a device that has not been previously configured may connect to a network. Assume again that device 78a-1 is being connected to network 52a and that device 77a and device 78a-2 are already connected, with local configuration server 104a-2 being active. On reception of the composite data structure notification from location configuration server 104a-2 at device 78a-1, and if device 78a-1 does not find a complete set of configuration identified with its own unique device id, but does find a partial set of configuration information. In other words, device 78a-1 is able to locate partial configuration, but the information is not complete; e.g. the composite data structure may contain a complete local-network profile as described in the Petrie, and/or may contain generic device profile data specific to the device type, but not contain any user-specific information. If parts of the required information are missing, then device 78a-1 may contact S/CMS 76a and/or D/CMS 86a as described in relation to system 50, and obtain full information, and begin normal operation. After the above configuration steps, device 78a-1 will then register itself with local configuration server component 104a-2 as previously described, informing local configuration server component 104a-2 of the current configuration data device 78a-1, which local configuration server component 104a-2 will then add to the composite data structure.

As discussed above there are various operational modes of system 50a. As another example, a device that has not been previously configured connects to a network, and that network has not yet been initialized or the device is being connected to a non-operational network. In this example assume that either a single device (e.g. device 78a-2) or a group of devices (devices 78a-1 and 78-2) are starting up simultaneously on a network (e.g. network 52a) that is non-operational in the sense that no local configuration server 104a has been elected and is active. There are multiple scenarios that fit this description: For example, the initial power up of a new network, or single or multiple devices may power-up at the same time on the network. In the case of a single device 78a-2 starting up, by itself, on network 52a, then device 78a-2 will begin the process of establishing the network configuration. In the case of multiple devices 78a starting up, a power failure situation is represented. Once power is restored multiple devices 78a will power up simultaneously and begin to look for their configuration. Both the single device and multiple device situations can be handled in a similar manner and will be described in greater detail below.

As described previously, on power up a device 78a with a local configuration server component 104a can be configured to emit a broadcast message requesting the address of an active local configuration server component 104a. In this case, where no local configuration server component 104a is active, no response will be received. All devices 78a that are powering-up will observe the traffic on network 52a and will receive the broadcast messages from the other devices 78a, if any, on network 52a that are also requesting the address of the active local configuration server 104a.

At this point there are different cases as to how events can unfold. First, where the device 78a sees no request messages other than its own, then that device 78a will determine that that particular device 78a is the only device on network 52a. After a timeout, that device 78a will assume the role of the local configuration server using its local configuration server component 104a and will then proceed with configuration. An exemplary process for such configuration is described in greater detail below. Second, if there are multiple devices 78a simultaneously powering up on network 52a, then devices 78a will see each other's request messages for an active location configuration server component 104a. Devices 78a can then suspend their configuration operation and allow the normal local configuration server election process to proceed. An exemplary election process is described in greater detail below. However when a local configuration server component 104a becomes active, the configuration process as described in relation to system 50 will proceed, with some additions.

The discussion in relation to system 50 describes the configuration process for a device that has not previously been configured. In system 50a, a configuration process is provided for a situation where which one or more devices have been previously configured. This configuration process also addresses the situation when there is a mixture of previously configured and non-configured devices.

A newly active local configuration server component 104a can then approach the network servers (e.g. S/CMS 76a and/or D/CMS 86a) in the manner described in relation to system 50 requesting configuration. However, one variant from the manner described in relation to system 50a is that active local configuration server component 104a will identify itself to these servers (e.g. S/CMS 76a and/or D/CMS 86a and/or aggregator 300a) not as an individual device 78a requesting configuration but as an active local configuration server component 104a requesting network information on behalf of one or more related devices 78a.

The device 78a with the active local configuration server component 104a may either contact S/CMS 76a and/or D/CMS 86a directly, as described in relation to system 50, or it may be directed to aggregator 300a. The address of aggregator 300a can be supplied by, for example, S/CMS 76a or D/CMS 86a alone or by S/CMS 76a or D/CMS 86a acting in concert. Alternatively, the address of aggregator 300a can be part of the software/firmware built into the relevant device 78a, or as a configured parameter thereof.

The active local configuration server component 104a will thus approach S/CMS 76a (and/or D/CMS 86a and/or aggregator 300a) and request the stored composite configuration data for its network. Active local configuration server component 104a (e.g. local configuration server component 104a-2) will identify its network (e.g. network 52a) by supplying S/CMS 76a (and/or D/CMS 86a and/or aggregator 300a) with the unique device ids of all devices 78a that have registered with for local configuration service. S/CMS 76a S/CMS 76a (and/or D/CMS 86a and/or aggregator 300a) will attempt to identify the local network by matching the supplied unique device ids against the contents of its list of current networks. S/CMS 76a S/CMS 76a (and/or D/CMS 86a and/or aggregator 300a) will compare the unique device ids against the membership of all networks for which S/CMS 76a S/CMS 76a (and/or D/CMS 86a and/or aggregator 300a) has records. Alternatively, a single unique identifier representing all devices of the active local configuration server component 104a network can be used for identification, for example an identifier corresponding to all devices and users in a small business receiving hosted communication service.

Several cases can be considered in the context of active local configuration server component 104a will thus approach S/CMS 76a (and/or D/CMS 86a and/or aggregator 300a).
1) Assume no device networks are associated with any of the unique identifiers. Therefore S/CMS 76a (and/or D/CMS 86a and/or aggregator 300a) can assume that a new network of devices is being configured. Based on this assumption, consider the following:
   a). Assume the active local configuration server directly contacts S/CMS 76a and/or D/CMS 86a. If the supplied device identifiers are unknown or invalid, the contacts will be rejected as described in relation to system 50 and/or Petrie and configuration will not succeed.
   b). Assume aggregator 300a is connected. Aggregator 300a can create a new network and supply that network with a default empty composite configuration data structure. The active local communication server component 104a can then subscribe to aggregator 300 and aggregator 300 will, as part of the normal subscription behaviour, issue a notification to active local communication server component 104a that contains a default empty composite configuration data structure (or a reference to it). The active local communication server component 104a will in turn issue notifications to the other devices 77a, 78a on the local network 52a which have subscribed with that active local communication server component 104a. As described-previously, each device 77a, 78a can examine the composite data structure that it has received and look for its own configuration. Since no device 77a, 78a will find their configuration, they will each attempt to gain their configuration information as described in relation to system 50, and will then update active local communication server component 104a with their newly acquired configuration data when they have successfully received configuration as described elsewhere in this specification.
   c). As an alternative to (1)(b), aggregator 300a may itself contact S/CMS 76a and/or D/CMS 86a directly, on behalf of the collection of devices 77a, 78a, and complete the composite data structure representing all configured devices 77a, 78a, optionally, along with default data corresponding to any devices 77a, 78a not found, and then pass this composite data structure to active local communication server component 104a in the notification, or subsequently as an update notification. As described previously, each device 77a, 78a will then receive a notification from the active local communication server component 104a, and examine the composite data structure that it has received looking for its own configuration, and will configure itself based on the supplied information.
2) Assume exactly one device network is found which contains some or all of the devices. Therefore, it can be assumed that the local network has previously been created and that it is recovering after a power failure or some other cause. Based on this assumption, consider the following:
   a). In the case where the active local communication server component 104a directly contacts S/CMS 76a and/or D/CMS 86a, if the device identifiers are known and valid, the active local communication server component 104a will receive a notification containing corresponding composite data. The active local communication server component 104a will, as described previously, supply this data structure to the devices 77a, 78a on network 52a that have subscribed to it.
   b). Where aggregator 300a is used, a subscription can be entered for this network by the active local communication server component 104a at aggregator 300a. Aggregator 300a will, as part of its normal subscription operation, supply the current version of the composite configuration data structure for this network in a notification to local communication server component 104a. Local communication server component 104a will, as described previously, supply this data structure to the devices 77a, 78a on network 52a who have subscribed to it. There can be a mixture of previously configured, partially configured and unconfigured devices on the network 52a.
   c). The previously configured devices 77a, 78a can find their configuration information in the composite data structure that it has received and will begin operation using this configuration.
   d). The devices 77a, 78a that do not find their configuration information, or find partial information, can assume that they have not previously been configured and can attempt to receive their configuration data as described in relation to system 50, and can then update the elected local communication server component 104a with their newly acquired configuration data when they have successfully received configuration as described elsewhere herein.
   e). As an alternative to (2)(d), aggregator 300a can itself contact S/CMS 76a and/or D/CMS 86a directly, on behalf of any of the collection of devices 77a, 78a for which aggregator 300a has no corresponding configuration data, and complete in the composite data structure using this data for those previously unknown devices, optionally along with default data corresponding to any devices not found, and then pass this composite data structure to the local configuration server 104a in the notification, or as an update notification as a later step. As described previously, each device will then receive a notification from the elected local communication server component 104a, and examine the composite data structure that the device has received and look for its own configuration, and then configure itself based on the supplied information.
3) Assume that more than one network is found which contain the device identifiers. In this case, it will be assumed that a new network is being constructed that contains devices that have been used previously on other networks. One approach, and one that addresses the issue of privacy, is to assume that the previous configuration data is no longer valid. Based on this assumption, consider the following:
   a). In the case where the local communication server component 104a directly contacts S/CMS 76a and/or D/CMS 86a, if the devices ids are unknown or invalid, the attempt(s) to configure will be rejected as described in relation to system 50 and/or Petrie, and configuration will not succeed. In the case where the device identifiers are known, it is likely that the configuration information has changed to reflect the new network configuration, and this new data will be passed to the local communication server component 104a in the normal notification process, thence to the devices in notifications from local communication server component 104a, and the new configuration will become active. In the latter case, some or all of the per-device configuration data from the previous network configuration may have been reset to defaults, erased, or preserved, depending on the nature of the change.
   b). In the case where aggregator 300a is used, a new device network representation will be constructed at aggregator 300a with the current devices as members. The existing configuration data on other networks for those devices on this new network will be removed. Similar to case 1) above, a default composite configuration data structure will be created and stored for this new network. Local communication server component 104a will be notified with this structure. The configuration process then proceeds as in case 1).

As a separate matter, there are several parts of operation that can require updating of the profile data held in the local communication server component 104a, aggregator 300a, or D/CMS 76a and S/SMS 86a. The updating may be originating from user action on device 77a, 78a (e.g. changing device preferences directly), indirectly by the user (e.g. via a Web interface to one of the servers in the system (local communication server component 104a, aggregator 300a, D/CMS 76a and S/SMS 86a), or by administrative action (e.g. via a maintenance tool) to one of the servers in the system (local communication server component 104a, aggregator 300a, D/CMS 76a and S/SMS 86a). In these cases, the servers involved in maintaining the data, as well as the device itself, remain synchronized with the latest version of the data.

In the case of user U or administrator updating at a server (local communication server component 104a, aggregator 300a, D/CMS 76a and S/SMS 86a) (and as opposed to at the device, which is described below), the actual action of updating the profile data in the servers can be by any number of well known methods, for example via Hypertext markup language ("HTML") Web interface, Hypertext transfer protocol ("HTTP") data transfer, Trivial File Transfer Protocol ("TFTP") or file transfer protocol ("FTP") data transfer, SIP Publish, etc., with the user or administrator locating the appropriate server using its URI, its DNS name, or a direct IP address. Such locations will be supplied to the user or administrator by the provider supporting the server(s), along with appropriate credentials (user name and password or similar) to gain access.

Propagation of profile data updates towards devices 77a, 78a, driven by changes made at any of the servers, either by administrative or user actions, can follow any of several well known methods, including SIP notifications as described in Petrie, FTP or TFTP file transfers, etc. In propagation towards device 77a, 78a, there are various scenarios to consider:
1) If the update is made at either the D/CMS 76a or S/CMS 86a (depending on where the appropriate data is held for the change), then aggregator 300a, local configuration server 104a and device 77a, 78a need to be informed:
   a) from D/CMS 76a or S/CMS 86a to aggregator 300a:
      i) where the changes apply to large numbers of devices 77a, 79a being served by aggregator 300a, mass file transfer of all, or parts of, the aggregator's 300a composite data structure can be used from D/CMS 76a or S/CMS 86a. Portions of the aggregator's 300a file structure can be updated as a result.
      ii) where changes apply to specific classes of device 77a, 78a or user U being served by aggregator 300a, methods can be used to identify only the specific changes to be made and the class of device or user they apply to, for example using XCAP Diff of similar Extended Markup Language ("XML") document to indicate the changes. Such changes can, for example, be indicated by way of a notification, as described in Petrie (whereby the aggregator 300a maintains a subscription to D/CMS 76a and to S/CMS 86a), or by a push mechanism such as XML SOAP or HTTP.
      iii) where only a single device 77a, 78a or user profile is updated (most likely case when the user makes the change at the provider's server side), then individual profiles could be file transferred, or SIP notifications as described in Petrie, or other methods could be used.
   b) from aggregator 300a to local configuration server 104a:
      i) any of the same methods used in a) could be used; however the scale of change is likely to be much smaller.
   c) from local configuration server 104a to device 77a, 78a:
      i) follows methods as previously described in this specification as described in relation to system 50a and based on Petrie;
      ii) a notification from the local configuration server 104a back to other devices 77a, 78a in network 52a (due to change of the composite data held at the active local configuration server 104a) will also result.
2) If the data is updated at aggregator 300a, then D/CMS 76a or S/CMS 86a (as appropriate to the data changed), local configuration server 104a and the device 77a, 78a need to be informed:
   a) from aggregator 300a to local configuration server 104a
      i) as in (1)(b)
   b) from local configuration server 104a to device 77a, 78a
      i) as in (1)(c)
   c) from aggregator 300a to D/CMS 76a or S/CMS 86a
      i) any of the methods described in (1)(a) could be used; however the direction of transfer, subscribe/notify or data push is reversed;
      ii) since aggregator 300a is isolating the D/CMS 76a and S/CMS 86a from detailed interactions, this updating may be relatively less frequent, and updates may be accumulated to some threshold, or scheduled as part of database backup or similar ongoing maintenance operations.
3) If the data is updated at the local configuration server 104a (most likely case for user-driven change at the actual device, see below), then the device, aggregator and D/CMS or S/CMS need to be informed.
   a) from local configuration server 104a to device
      i) as described in (1)(c).
   b) from local configuration server 104a to aggregator
      ii) as described in (2)(b); however the direction of transfer, subscribe/notify or data push is reversed.
      ii) unlike (2)(b), this updating should normally be immediate, or nearly so, to keep data held at the aggregator up to date in case of failure of the local configuration server 104a.
   c) from aggregator to D/CMS or S/CMS
      i) as described in (2) (a).

Propagation of profile data updates from device 77a, 78a towards aggregator 300a, D/CMS 76a and/or S/CMS 86a, driven by changes made at device 77a, 78a itself through the device's user interface, can use a number of well understood methods as well, such as SIP Publish, HTTP, TFTP, etc. In this case, the initial update is always from the device to the active local configuration server 104a, and based on the interactions described previously in this specification as described in relation to system 50a and based on Petrie, results in a notification from local configuration server 104a back to devices 77a, 78a, due to change of the composite data held at the active local configuration server 104a. Propagation from the local configuration server 104a to aggregator 300a and from the aggregator 300a to D/CMS 76a or S/CMS 86a is as described in (3)(b) and (3)(c) in the previous paragraph, respectively.

While a device 77a, 78a is capable of mobile or nomadic function and is operating in a network other than network 52a, that device 77a, 78a will not be in contact with any local configuration server 104a. During this time, device 77a, 78a may continue to operate using stored configuration data retrieved as described previously. If user U changes device 77a, 78a configuration through a user interface of device 77a, 78a, the device-internal copy of the configuration data will be modified. Upon return and re-connection to home network 52a, device 77a, 78a propagates the updated configuration data towards the local configuration server 104a using the methods described above, and the local configuration server 104a updates its composite data structure as a result. Any changes made at aggregator 300a, D/CMS 76a and/or S/CMS 86a during this time will be integrated with these changes, and as a result of the subscription process device 77a, 78a, will then receive a notification containing all changes relevant to it.

As another separate matter, the present specification also provides for maintenance of the configuration involving interaction between local configuration server 104a and aggregator 300a. In operation, aggregator 300a and local configuration server 104a operate as a hierarchical set of servers. They act as repositories and pathways for configuration data generated by local devices 77a, 78a and the network-based management systems of the device and service providers.

Devices 77a, 78a on network 52a register their configuration information with the active local configuration server 104a. The active local configuration server 104a composes these separate configuration data structures into a single composite configuration data structure for the entire network 52a. The local devices 77a, 78a subscribe with the active local configuration server 104a for this data structure. The active local configuration server 104a notifies all of other devices with a local configuration server 104a with the composite data structure on any or a sufficiently significant change in it.

In turn, the active local configuration server 104a will register its composite configuration data structure with aggregator 300a. As described previously, aggregator 300a can supply this composite data structure to the active local configuration server 104a on the power up of network 52a. Aggregator 300a maintains a data structure linking the unique device ids of all devices 77a, 78a with the internal id of network 52a that aggregator 300a generates for its own purposes. Thus for devices 78a which have a local configuration server 104a, then that device 78a can use its own unique device id for registration purposes.

Registration and removal of devices and networks is another matter. A device 77a, 78a may be removed from network 52a temporarily due to normal device moves, power-down, or due to wireless mobility for example. Indeed, devices 77a, 78a may also be permanently removed. Configuration information for a device 77a, 78a that has been permanently removed from network 52a can be removed from the composite data structure maintained by the local configuration server 104a in order to prevent that composite data structure from bloating with unused information. At the same time, it is undesirable to prematurely remove data corresponding to devices 77a, 78a which are still valid, but not currently connected, to reduce or avoid unnecessary reconfigurations and thereby user inconvenience.

To reduce or avoid such unnecessary reconfigurations, registrations on the active local configuration server 104a can be provided with a time-out value. Such a capability is provided by the SIP subscription service, for example. On expiration of the time-out, the active local configuration server 104a removes configuration data for the removed device 77a, 78a from the composite data structure. The active local configuration server 104a then notifies the other devices on the local network of the change by issuing the new composite data structure and, if aggregator 300a is present, updates registration on aggregator 300a with the new composite data structure. The time-out can be selected to be long enough (days or more) so that devices can be conveniently removed from the network 52a for moves or in case of wireless devices for later reconnection. Devices 77a, 78a maintain their subscription at the active local configuration server 104a by renewing their subscription more frequently than time-out value requires. This can be done by setting a relatively shorter time-out at the relevant device 77a, 78a after each re-subscription, at each new notification from the local configuration server 104a, each time the device 77a, 78a powers up and/or at each powerdown, etc. If this device 77a, 78a time-out expires, the device 77a, 78a resubscribes its current configuration data and sets a new time-out.

A similar issue exists at level of aggregator 300a in which it is wasteful to maintain storage for networks such as network 52a that are no longer in operation. Registrations at aggregator 300a can also be managed with a time-out. If the subscription for a given network and local configuration server 104a combination expires, the network will be removed from the store of aggregator 300a. Local configuration server 104a maintains subscriptions at aggregator 300a by renewing subscriptions more frequently than this time-out requires. This can be done by setting a relatively shorter timeout in local configuration server 104a side. If the local configuration server 104a time-out expires, the local configuration server 104a will resubscribe with its existing configuration data and set a new time-out.

As another matter, the present specification also provides for configuration with the network-based servers. Since aggregator 300a maintains its configuration storage network data by use of the unique device ids, or by use of device network ids representing one or more related devices, aggregator 300a has the capability of providing a service to maintain these configurations for network-based configuration (those of the service and device providers) systems. Thus, as shown in Figure 3, the configuration systems of both the service provider and the device provider may request both read and write access to configurations based on unique device and/or device network ids. Aggregator 300a can provide a centralized means for updating configurations, which eliminates the need for the network management systems to maintain IP and subscription sessions (in order to maintain separate arrangements with each configured device for to maintain and update its configuration) directly with large numbers of separate devices. Additionally, aggregator 300a and the local configuration server 104a function are on line. Thus the network-based configuration servers (D/CMS 86a and S/CMS 76a) do not have to deal with the problems of ensuring that all devices, even those which are only rarely connected, are maintained at the desired configuration level. Resiliency levels at the level of the aggregator can be added to ensure higher reliability (e.g. redundant aggregators maintaining independent copies of the configuration data, load sharing across multiple cooperating aggregators etc.), and mass flood events are greatly reduced by load distribution and use of cached data at both local configuration server 104a and aggregator 300a during configuration re-acquisition.

The capability provided to allow the network-based configuration servers (D/CMS 86a and S/CMS 76a) to read device configuration data also can allow them to analyze device configuration data. Since users U can customize their device to their own preferences, this data can be analyzed to determine the implementations of possible customizations by users, service preferences, buyer behavior with respect to other services, etc. Such "data mining" capability can assist with customer retention by device provider 70a and service provider 66a, as well as to facilitate introduction of new services.

Having established subscription relationship with the local configuration servers 104a, aggregator 300a can notify each local configuration server 104a of updated configuration data, and local configuration servers 104a can, in turn, notify the devices 77a, 78a of the updated consolidated configuration data.

To complete the process of managing device configuration by the network-based configuration servers (D/CMS 86a and S/CMS 76a) each device on receiving a notification from the local configuration server 104a of the composite configuration data structure can extract its own configuration from it. It will load this configuration into itself and continue operation with it.

If the unique device id is created to contain an indication of some device characteristic (for example, by containing the model number within it), aggregator 300a can also offer a service whereby the configurations of devices 77a, 78a with this characteristic could be updated with one command. This could be provided by use of a mask for the unique device id in the configuration update service describe above. All devices 77a, 78a which match the masked unique device id could be updated at one go. Alternatively, the data profiles for the various levels of configuration data (as described for example in Petrie), can identify devices 77a, 78a with common characteristics (manufacture, model, sw revision, use of particular features or services, user interface capability, etc), and aggregator 300a can be used to filter those profiles for updating and subsequent change notification (via local configuration server 104a) to all devices matching the characteristic. Similarly, changes can be applied to all devices 77a, 78a within a particular device network 52a, either using a device network unique id or knowledge of the collection of devices in a particular network held at aggregator 300a.

As another matters, to provide a functioning local configuration server 104a is always available (or is at least as available as much as possible) the election process for local configuration server 104a can be constantly occurring. Devices 78a that include local configuration server 104a can continually compare their specific capacity to perform the function of elected local configuration server 104a with each other. The device 78a found to be the most capable will assume the role. If a currently active local configuration server 104a fails or is removed from network 52a, the election process can provide that a local configuration server 104a is promptly enabled to assume this role. If a more capable device 78a is installed and the network or the material capability of the running local configuration server 104a changes, then the more capable device can assume the role.

Periodically, each device 78a on network 52a can issue a broadcast (or Multicast-see previous description) message that specifies its capability for being the local configuration server 104a. Each device 78a can contain an algorithm that will evaluate such characteristics as available computing power, storage capacity user preference etc to produce a metric that indicates its capacity for performing this function. The broadcast message with contain the device unique id and the metric. Each device 78a on network 52a receives these messages. Techniques from IETF draft-shi-p2psip-hier-arch-00.txt (previously cited) can be suitably modified to be used for such process of selecting an active local configuration server 104a.

Various methods can be employed to elect the active local configuration server 104a. One example method is based on the use of a counter and another example is the use of a list. In the counter method, each device 78a on network 52a maintains a counter. This counter may be called the local configuration server 104a counter. At a period which is longer than the period at which the metric messages are broadcast (i.e. the metrics about the capacity of a particular device 78a to act as the active local configuration server 104a), the counter will be reset to zero. This can be called the local configuration server 104a period. Since the period between the resetting of the local configuration server 104a counter is longer than the period between metric announcement messages, each device 78a sees at least one announcement message from every device 78a on network 52a. At the reception of each metric message, each device 78a compares the metric of the broadcasting device 78a with its own. If the announced metric indicates that the announcing device 78a has a greater capacity to act as the active local configuration server 104a than the device 78a receiving the metric, then the local configuration server 104a counter can be increased. Ties between comparisons can be broken by comparison of the unique device id announced in the metric message with the devices own unique device id. If the announced device id is greater than the device's own id then the counter will be increased.

At the end of its local configuration server 104a period, a device's local configuration server 104a counter will be zero if and only if it is the most capable device on the network to perform the role of active local configuration server 104a. If that device is currently fulfilling that role, the device will do nothing. If it is not currently fulfilling the role, the device will issue a broadcast (or Multicast) message announcing that it has assumed the role. The broadcast message contains the IP address of the new local configuration server 104a and the port on which device new subscriptions and registrations should be made. The previous local configuration server 104a, on seeing this announcement will relinquish the role. Devices 78a will drop all subscriptions to the previous local configuration server 104a and re-subscribe to the newly announced local configuration server 104a for notification of changes in the composite configuration data structure in the same manner as described above. To provide the most current versions of its configuration data, each device 78a will register its configuration data with the now active local configuration server 104a as previously described. Alternatively, the previously active local configuration server 104a can be directly queried by the currently active local configuration server 104a, or the previously active local configuration server 104a can announce to the currently active local configuration server 104a (for example using the SIP Publish mechanism), in order to directly exchange the most recent composite data.

To reduce the likelihood of the occurrence of a race condition of the elected local configuration servers 104a, device 78a can be configured so that they cannot change in its local configuration server 104a status for some number of announcement cycles (two or more) after a local configuration server 104a change announcement.

In the list-based method of electing a local configuration server 104a, each device 78a on the network will maintain a list. This list will be used to contain the unique device ids of all devices 78a on network 52 that are more capable of being local configuration server 104a than the device 78a itself. This list can be called the local configuration server 104a priority list. At a period, which is longer than the period at which the metric messages are broadcast, the list will be emptied. This period can be called the local configuration server 104a prioritization period. Since the period between the emptying of the local configuration server 104a list is longer than the period between metric announcement messages, each device 78a sees at least one metric announcement message from every other device 78a on network 52a. At the reception of each metric announcement message, each receiving device 78a will see if the sending device 78a message is already on its local configuration server 104a priority list. If so, the entry will be removed. Each receiving device 78a then compares the metric in the announcement message with its own metric. If the received metric is higher, indicating that the announcing device is more capable of fulfilling the role of local configuration server 104a, then the unique device id of the sending device 78a will be entered on the list of the receiving device78a.

At the end of the local configuration server 104a prioritization period, each device 78a will examine its list. If the list for a given device 78a is empty, then that device 78a can assume it is most capable of fulfilling the role of local configuration server 104a. If it is currently fulfilling this role, then it will do nothing. If that device 78a is not currently fulfilling that role, then that device 78a will issue a broadcast message announcing that it has assumed the role. The announcement message will contain the IP address of the new local configuration server 104a and the port on which device subscriptions and registrations should be made. All devices 78a will then subscribe to the newly announced active local configuration server 104a for notifications of changes to the composite configuration data structure in the same manner as described above. To ensure that the current active local configuration server 104a has the most current versions of its configuration data, each device 78a will register its configuration data with it as previously described. Alternatively to the last point, the previous local configuration server 104a can be directly queried by the new one, or the previous local configuration server 104a can announce to the current local configuration server 104a for example using the SIP Publish mechanism, in order to directly exchange the most recent composite data.

To reduce the likelihood of the occurrence of a race condition of continuous change of the elected local configuration servers 104a, device 78a can be configured so that they cannot change in its local configuration server 104a status for some number of announcement cycles (two or more) after a local configuration server 104a change announcement.

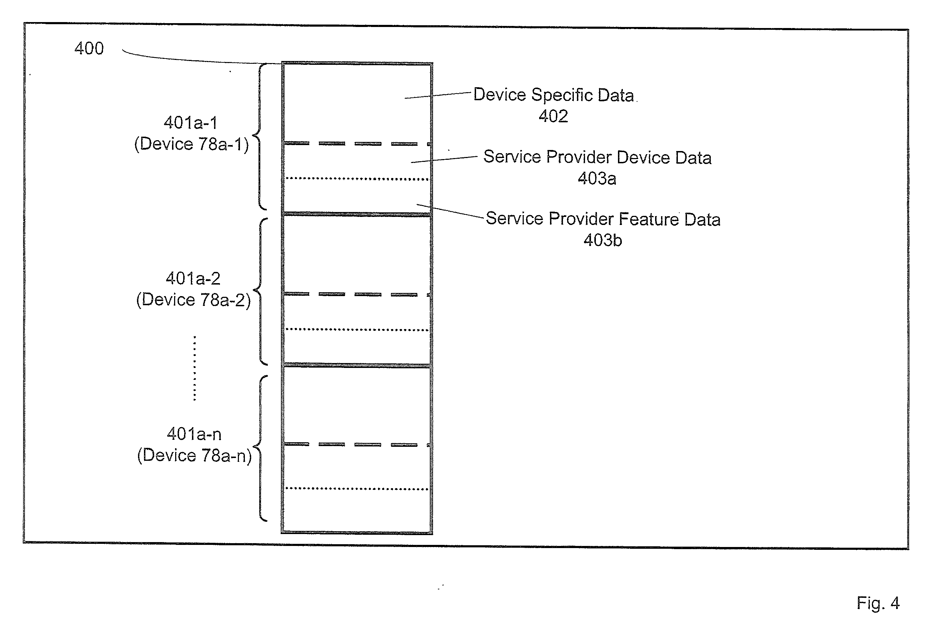

Attention is now directed to Figure 4 which depicts a non-limiting example of a composite data structure 400 held at the active local configuration server 104a. The composite data structure 400 comprises respective data sets 401a-1, 401a-2...401a-n for a plurality of respective devices 78a-1, 78a-2,...78a-n. Each data set 401a comprises device specific data 402, which is generally supplied by device provider 70a, for example via D/CMS 86a. Device specific data 402can include data pertinent to a specific revision or model of the respective device 78a. Each data set 401a further comprises data 403a, 403b which allows device 78a to find S/CMS 76a. Data 403a, 403b is generally provided by service provider 66a as described above. Data 403a comprises service provider data that is specific to device 78a and can include data and programs that service provider 66a supplies to differentiate its device offerings from that of its competitors. Data 403b includes data for features that users can program for device 78a. Examples of these are a "Timed Reminder", "Do Not Disturb" and "Call Forwarding" features.

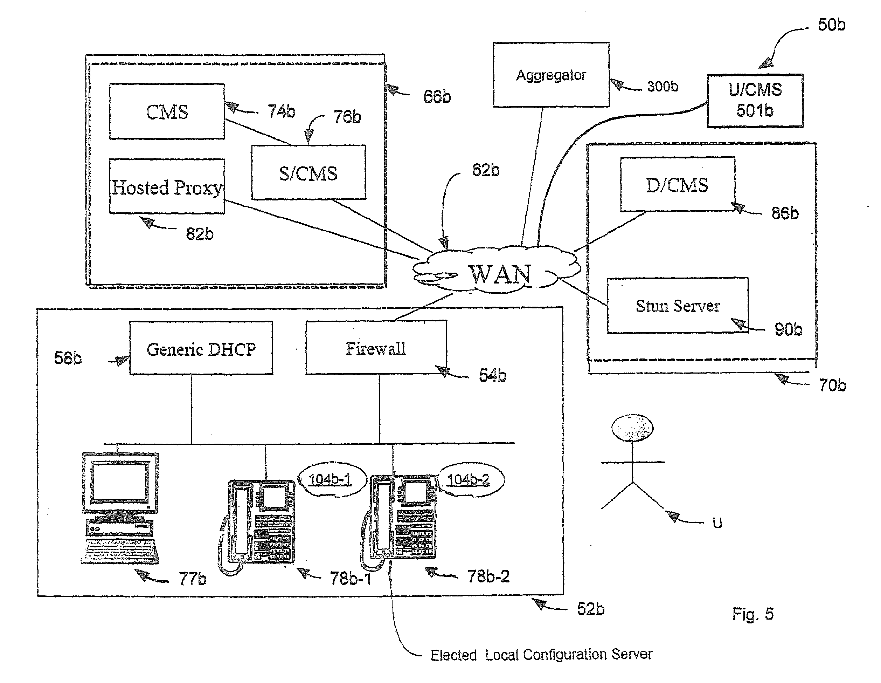

Attention is now directed to Figure 5, which depicts a configurable IP telephony system in accordance with another embodiment which is indicated generally at 50b. System 50b shares many of the same components as system 50a, and accordingly, like components in system 50b share like reference characters to counterparts in system 50a, except followed by the suffix "b". Of note, system 50b includes a user configuration management server (U/CMS) 501b, which will be discussed in greater detail below. Also, in system 50b, devices 78b substitute for devices 78a in system 50a. Devices 78b include substantially the same functionality as devices 78a in system 50a. However, device 77b does not include a local configuration server component, although in other embodiments device 77b could include this component. Local configuration server component 104b can optionally be configured to be accessible and/or configurable via a web interface and/or a local programming interface.

Whereas in system 50a devices 77a, 78a can be customized when they disconnected from the network and later reconnected, allowing user U to customize the configuration of his/her device 77a, 78a to optimize its operation for his/her particular purposes, in system 50b, devices 77a, 78a can be customized/configured based on receiving log-in data from user U. For example, devices 77b, 78b are configured such that user U wishing to tie his/her features to device 77b, 78b can register on it using log-in data. This may be done through a magnetic card system and/or with data entry from a device keypad or by any other suitable method (e.g. RFID cards and readers). From any method, the log-in data comprises a unique identity for user U and can further comprise a personal security code. The unique identity can be of the form of a SIP URI, a directory number etc. The personal security code can be a PIN (Personal Identity Number), a password, pass phrase, biometric identifier etc. The log-in data enables device 77b, 78b to identify requested user-associated feature set data, in turn associated with the log-in data, and further provide an assurance measure that the request is legitimate.

User-associated feature set data can include data for the configuration of speed dial buttons, the customization of the display, contact lists, etc. If user U logs out from his/her device he/she may want and expect these configurations to be preserved and be presented when he/she logs back into device 77b, 78b.

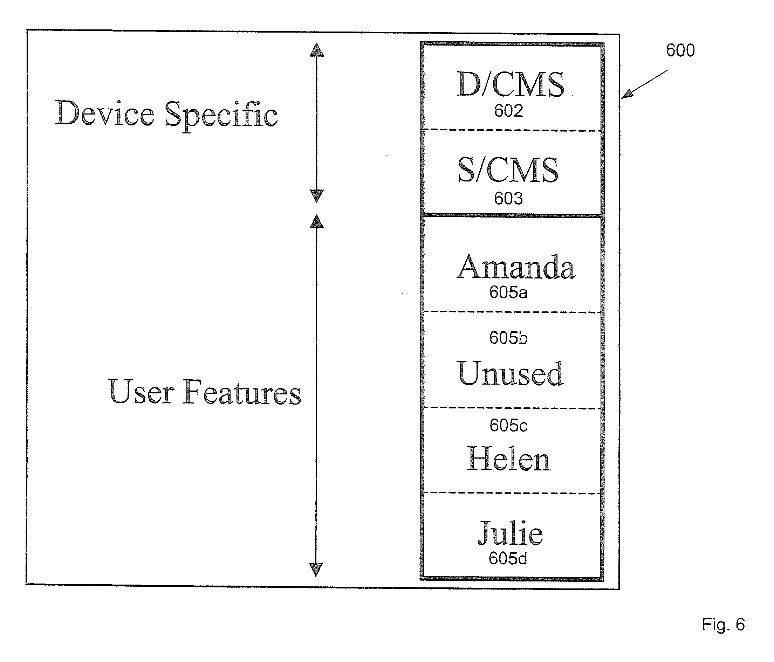

Figure 6 depicts a consolidated data structure 600 stored at each device 77b, 78b, similar to consolidated data structure 400 but including user specific feature set data 605a, 605b,....(generically a set of data 605 and collectively data 605). The portion of the consolidated data structure 600 dedicated to each device 77b, 78b comprises the parameters for the programmable features that are tied to that device, for example in data 602 (similar to data 402) and data 603 (similar to data 403a and 403b). However, to allow for features that are tied to users and not devices, data 605 comprises the programmable feature preferences of all users who are known to the local network 52b. In some embodiments, data 605 can be encrypted except for a single portion which identifies the user (i.e. log-in data associated with each user specific feature set data 605).

Hence, user U wishing to have his/her feature preferences assigned to device 77b, 78b will enter his/her log-in data as described above. device 77b, 78b will search the its copy of consolidated data structure 600 using the log-in data as an identifier for user associated feature set data 605 associated with user U. There are various scenarios to consider:

### 1. User Known to Local Area Network 52b.

If the search is successful, the set of data 605 associated with the received log-in data will be identified. If the set of data 605 is encrypted, device 77b, 78b can attempt to decrypt data 605 using the personal security code as a key. A portion of data 605 can include data (e.g. the name of user U, the personal security code itself etc.) that will allow device 77b, 78b to confirm that the correct personal security code has been entered. If decryption is unsuccessful, then device 77b, 78b can use well-known methods to either request reentry of the log-in data or reject and report the attempt (e.g. to an administrator) as an attempted intrusion. If the decryption is successful, however, device 77b, 78b loads the decrypted set of data 605 into its working memory (e.g. volatile memory) and begins to function to the preferences of user U as defined by data 605.

As depicted in Figure 5 consolidated data structure 600 can include data 605 associated with one or more users. While Figure 5 depicts consolidated data structure 600 as being configured to store four sets of data 605, including data 605 associated with users U ("Amanda", "Helen", and "Julie") and a set of data 605 as yet undedicated to a particular user ("Unused"). However, any suitable number of sets of data 605 can be stored. Furthermore, different devices 77b, 78b can be configured to store different number of sets of data 605.

### 2. User Unknown to Local Area Network 52b.

In some embodiments a new user attempting to log-in to device 77b, 78b can be unknown to the local network 52b. Hence, in such scenarios, a search of the consolidated data structure 600 using the received log-in data will be unsuccessful. For example, such a new user can be a valid member of a larger organization that is associated with the local area network 52b and is using local area network 52b for the first time, either on a go-forward permanent basis, or temporarily (e.g. the local area network 52b is in a local office of a nation-wide business organization and the new user is visiting the local office). Hence, when the search for data 605 is unsuccessful, device 77b, 78b can send a request to U/CMS 501b via WAN 62b. U/CMS 501b generally comprises an image or copy of all data 605 in system 50b. For example, while only local area network 52b is depicted in Figure 5, it is understood that system 50b can comprise a plurality of local area networks similar to local area network 52b, and that each of the plurality of the local area networks are associated with different sets of users. Hence, a user new to local area network 52b can be associated with a different local area network 52b. Once again, such a situation can arise if a new user to local area network 52b usually uses a device (similar to device 77b, 78b) in another local area network in system 50b. Hence data 605 associated with the new user is stored at U/CMS 501b, but not at device 77b, 78b.

In some embodiments, all data 605 stored in U/CMS 501b is stored in the same encrypted format as data 605 stored in device 77b, 78b. Furthermore, in some of these embodiments, data 605 stored at U/CMS 501b can comprise an unencrypted identifier for each particular set of data 605, so that each particular set of data 605 can be identified and accessed. In some of these embodiments, U/CMS 501b will not have access to the encryption keys associated for data 605 and so will not be able to decrypt any encrypted data stored therein, though data 605 can be located and transmitted to a requesting device 77b, 78b.

Once U/CMS 501b receives the log-in data associated with the new user, U/CMS 501b can search its copies of data 605 for a particular set of data 605 associated with the received log-in data. In some embodiments, it can do so in a similar manner to the technique used by devices 77b, 78b. In particular, U/CMS 501b can search for a particular set of data 605 whose identifier is the same as that provided in the log-in data. Presuming particular set of data 605 is found, U/CMS 501b then sends data 605 back to the requesting device 77b, 78b. In some embodiments, the transmitted data 605 is encrypted, as described above. and the encrypted data is sent. The requesting device 77b, 78b then decrypts the received data 605 (if encrypted), using the techniques described above, and will then implement the features defined by the received data 605. The consolidated data structure 600 at device 77b, 78b will be updated to include the received data 605. Furthermore, the received data 605 can be transmitted to local configuration server 104b-2 to be added to the consolidated data structure at local configuration server 104b-2. Local configuration server 104b-2 will in turn, update aggregator 300b and all other devices 77b, 78b on local area network 52b with an updated consolidated data structure 600.

In some embodiments, it can be desired that users be deregistered in local area network 52b. In these embodiments, device 77b, 78b can be configured with interface where by a user, on entering log-in data, can remove his associated set of data 605 from a device 77b, 78b. Such changes can be propagated to local configuration server 104b-2, which in turn propagates the changes to other devices 77b, 78b and aggregator 300b.

In further embodiments, a given set of data 605 can be removed from the consolidated data set 600 if log-in data associated with the given set of data 605 is not received within a given time period. In other words, it is assumed that if a user has not logged in for the given time period, that user is no longer associated with local area network 52b. This can be performed by local configuration server 104b-2 in cooperation with devices 77b, 78b on the local network 52b. For example, a user registering and de-registering on device 77b, 78b can be announced (as described previously). In some embodiments, with these announcements, local configuration server 104b-2 can maintain a list of users whose data 605 is stored on the local network and who are not currently registered (i.e. logged in) on any device 77b, 78b. This list may be maintained in association with a calendar time of a user's last deregistration. Local configuration server 104b-2 can periodically scan this list and delete the stored data 605 for those users who have not registered for a defined period of time. Local configuration server 104b-2 can then propagate the updated user data to all devices on local network 52b. It is understood that, in some embodiments, data 605 is encrypted, as described above.

In further embodiments, a memory in devices 77b, 78b, storing consolidated data structure 600, can become full. In these embodiments, when a user unknown to the local network 52b attempts to log-in to device 77b, 78b by providing log-in data, as described above, and when data 605 associated with the received log-in data is received at device 77b, 78b from U/CMS 501b, device 77b, 78b can be enabled to choose a set of data 605 stored at device 77b, 78b at random and overwrites it with data 605 received from U/CMS 501b. If the overwritten data 605 is for an active user, it will not affect the active user since their associated data 605 is in stored, albeit temporarily, in a working memory of device 77b, 78b. While their associated data 605 can be lost upon deregistration, the next time the user logs in, his/her associated data 605 can be retrieved from U/CMS 501b as described above, and another set of data 605 can be randomly over written. As this process continues, data 605 for inactive users will gradually be deleted from devices 77b, 78b, as well as local network 52b.

Devices 77b, 78b may also cooperate whereby a device 77b, 78b on which a user has newly registered may announce the registration by a broadcast or Multicast message. Other devices 77b, 78b on reception of this message may deregister the user. Thus a user may roam across a network but only be served by one device 77b, 78b at a time.

In some embodiments, it may be desired to make changes to a given set of data 605: in other words, a user may wish to update user features available at a device 77b, 78b. In these embodiments, a user may log into a device 77b, 78b and program his/her features on device 77b, 78b on which he/she is registered. The device 77b, 78b will update its copy of data 605 and propagate the changes to the local configuration server 104b-2, which in turn propagates the changes to other devices 77b, 78b and aggregator 300b. It is understood that, in some embodiments, data 605 is encrypted, as described above.

In embodiments where device 77b, 78b does not find data 605 associated with user logging in (e.g. data 605 has been over written due to a memory in device 77b, 78b being full), data 605 for the user logging in is retrieved from U/CMS 501b as described above. Again, other data 605 is randomly overwritten with data 605 received from U/CMS 501b, and this data 605 is again propagated to local configuration server 104b-2. Such propagation can occur after changes are made. In other embodiments, such propagation can occur before changes are made, and then again after changes are made.,

In further embodiments, device 77b, 78b will send a copy of the data 605 to the U/CMS 501b. The U/CMS 501b will then update its version. In some embodiments, U/CMS 501b will then update its version after verifying that the copy is valid. In some embodiments, for example embodiments where the data 605 is encrypted, U/CMS 501b can validate the data 605 by decrypting at least a portion of the proposed received data 605 and verifying that it contains a known piece of user data, presuming U/CMS 605 has access to a key for decrypting the at least a portion of the proposed received data 605.

In other embodiments, a trust relationship may be established between U/CMS 501b and device 77b, 78b via a login procedure. For example, U/CMS 501b and device 77b, 78b can possess a shared secret that can be used as a password during a login procedure that will initiate a transaction to store or access user data, such as data 605 stored at U/CMS 501b. A TLS (transport layer security and/or and SSL (Secure Socket Layer)) session can be set up between device 77b, 78b and U/CMS 501b and the transaction (including transfer of a password), could take place within the session. In some embodiments, the shared secret can be provided to device 77b, 78b by the S/CMS 76b as part of the configuration procedure described above.

In some embodiments, privacy of user features can be an important consideration. For example, it could cause embarrassment to a user if another user discovered that one of the user's features had given them a low priority. Hence, in these embodiments, with features being provided directly by shared devices 77b, 78b and transmitted over local area network 52b, measures can to be taken to ensure that no one without the user's security code can access his/her features.

For example, in these embodiments, data 605 (i.e. which define user features) are unencrypted only on the device 77b, 78b on which the user U is currently active/logged in. Other devices 77b, 78b, and the U/CMS 501b, can store data 605 in an encrypted form. The user's security code is restricted from being sent over local area network 52b and/or WAN 62b. Further, the user's security code is used only locally on device 77b, 78b on which the user U is attempting to register, or at U/CMS 501b when it is verifying an updated set of preferences. Hence, in these embodiments device 77b, 78b does not send the U/CMS 501b user passwords and/or security codes. Rather device 77b, 78b will only send the user's unique identifier and/or the log-in data. The U/CMS 501b will then send device 77b, 78bd the encrypted user featured preference data 605 for decryption and/or storage. It is understood, however, that other suitable security techniques can be implemented in system 52b; for example, transport layer security (TLS) can be used on a link(s) between device 77b, 78b and U/CMS 501b.

Storing data 605 locally on devices 77b, 78b in local area network 52b, and further propagating changes to data 605 to other devices 77b, 78b as described above, roaming of users in local area network 52b and register on local devices 77b, 78b is generally enabled... Further, local storage of data 605 can provide a new type of value to traditional telecom features from the TDM (Time Division Multiplex) model, as known to persons of skill in the art. For example "Do Not Disturb" and "Timed Reminder" can take on new value. In traditional TDM systems these have been tied to communication devices. For example, Timed Reminder is a PBX feature in which a user can request to have his/her communication device ring at a certain time as a reminder. Timed Reminder has also been implemented as a reminder function built directly into a communication device, along with a clock function: for example hotel communication devices often have this function. However in the case of a roaming user who may be using multiple communication devices during the day, fixing these features to a specific communication device set is generally counterproductive. However, in present embodiments, a user may set a reminder on his/her desk device 77b, 78b, and have the timer become active on another device 77b 78b if he changes rooms and logs into the another device 77b, 78b, for example in a conference room where he /she is meeting. Similarly a user may enable the Do Not Disturb feature and not be concerned that he will become available if he moves from his desk to a meeting room, presuming he/she logs into whichever device 77b, 78b is local to the user.

The roaming functionality, as described above, can be of special convenience to certain hotel guests and, hence desirable for implementation by operators of hotels. For example, frequent stay plans are common in the hospitality industry with "road warriors": and other frequent travelers being given special consideration. With the roaming feature technology described above, a frequent guest can have his/her room telephone programmed to his/her preferences at check in. For example, a preferred wake up call time can be programmed once and can be automatically programmed into his/her room telephone at check in.

In general, present embodiments eliminate the need for centralized servers which mediate log-in into a plurality of communication devices and download feature data to each communication device upon log-in. Rather, in present embodiments, feature logic (in the form of data 605) is stored to at devices 77b, 78b at the periphery, and each user is provided service on the device 77b, 78b on which he/she is currently registered. Indeed, for small communication networks, the cost of a central proxy is generally prohibitive.

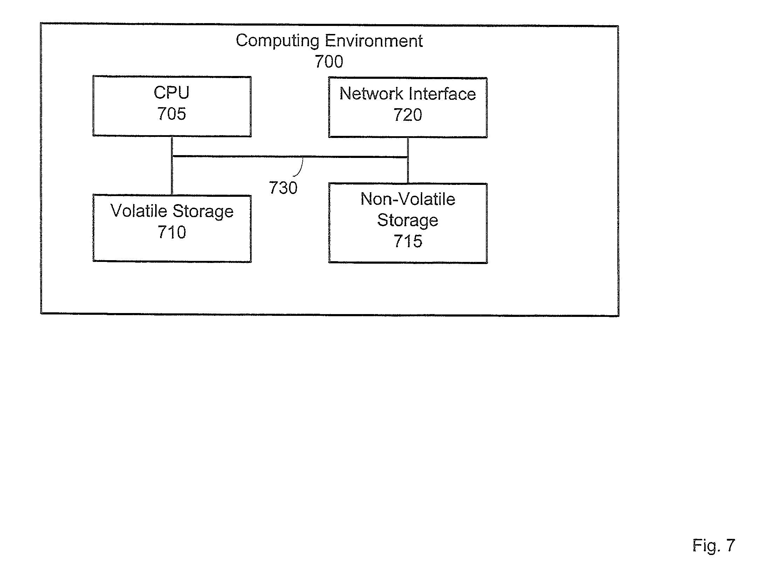

As depicted in Figure 7, it is in general understood that each of device 77b, 78b, S/CMS 76b, D/CMS 86b, aggregator 300b, and U/CMS 501b comprises a respective computing environment 700 comprising at least one central processing unit 705, volatile storage 710, non-volatile storage 715, and a network interface 720 interconnected by a bus 730, in any suitable configuration. The respective functionality of each of device 77b, 78b, S/CMS 76b, D/CMS 86b, aggregator 300b, and U/CMS 501b can be implemented within each respective computing environment 700.

While the foregoing provides discussions about certain embodiments, it is to be understood that combinations, variations and/or subsets of those embodiments are contemplated. For example, various components in system 50 can be combined with various components of system 50a. Also, teachings from the present specification may be combined with the teachings of Applicant's prior disclosures: i) NETWORK TRAFFIC MANAGEMENT, published as EP 2019513, and ii) DISTRIBUTED NETWORK MANAGEMENT, published as EP 2019523.

## Claims

1. A configurable end-user device comprising:
a computing environment comprising at least one central processing unit, volatile storage, non-volatile storage, and a network interface interconnected by a bus;
said network interface connectable to one or more other end-user devices via a local area network;
said end-user devices, including said configurable end-user device, for accessing at least one service that is available on a wide area network connected to said local area network;
said configurable end-user device having a configuration profile storing user-associated feature sets associated with respective log-in data, each user-associated feature set defining how said configurable end-user device is to be configured when said respective log-in data is received at said configurable end-user device.

2. The configurable end-user device of claim 1, wherein said end-user devices include one or more of an IP telephone, a media server, a media gateway, an interactive voice response server and a speech recognition server.

3. The configurable end-user device of claim 1, wherein said local configuration server is incorporated into an enhanced-device configured to also function as one of said end-user devices.

4. The configurable end-user device of claim 1, wherein different instances of said local configuration server are incorporated into a plurality of said end-user devices, including said configurable end-user device.

5. The configurable end-user device of claim 1, wherein said computing environment is configured to obtain new user-associated feature set data from a user configuration management server connected to said wide area network when new log-in data is received that is not stored in said configuration profile.

6. The configurable end-user device of claim 5, wherein said computing environment is configured to store said new user-associated feature set data in association with said new log-in data.

7. The configurable end-user device of claim 5, wherein said computing environment is configured to transmit said new user-associated feature set data to said local configuration management server for storage and distribution to said other end-user devices.

8. The configurable end-user device of claim 1, wherein said computing environment is configured to delete a given user-associated feature set if said associated respective log-in data is not received within a given time period.

9. The configurable end-user device of claim 1, wherein at least a portion of said configuration profile is originally provisioned to said configurable end-user device by a service provider configuration management server; said computing environment configured to recover its respective configuration profile from a local configuration management server without contacting said service provider configuration management server.

10. The configurable end-user device of claim 1, wherein said user-associated feature sets comprise at least one of a wake up call, a do not disturb feature, and a timed reminder.

11. The configurable end-user device of claim 1, wherein said user-associated feature sets are associated with at least one of the hotel industry and a frequent stay plan.

12. A local configuration server comprising:
a computing environment comprising at least one central processing unit, volatile storage, non-volatile storage, and a network interface interconnected by a bus;
said network interface connectable to one or configurable end-user devices via a local area network; said configurable end-user devices for accessing at least one service that is available on a wide area network connected to said local area network;
each of said configurable end-user devices having a configuration profile defining how said configurable end-user device can access said services, said configuration profile further storing user-associated feature sets associated with respective log-in data, each user-associated feature set defining how each said configurable end-user device is to be configured when said respective log-in data is received at each said configurable end-user device;
at least a portion of said configuration profile originally provisioned to said configurable end-user device by a service provider configuration management server;
said computing environment configured to maintain a copy of each said configuration profile such that each said configurable end-user device can recover its respective said configuration without contacting said service provider configuration management server.

13. A user configuration profile server comprising:
a computing environment comprising at least one central processing unit, at least one of volatile and nonvolatile storage, and a network interface interconnected by a bus;
said network interface connected to a plurality of local area networks via a wide area network;
each of said local area networks capable of including one or more configurable end-user devices;
said configurable end-user devices for accessing at least one service that is available on said wide area network connected to said local area network;
each of said end-user devices having a configuration profile defining how said end-user device can access said services, said configuration profile further storing user-associated feature sets associated with respective log-in data, each user-associated feature set defining how each said configurable end-user device is to be configured when said respective log-in data is received at each said configurable end-user device;
at least a portion of said configuration profile originally provisioned to said end-user devices by at least one configuration management server; and
said computing environment configured to maintain a copy of each said user-associated feature set, and other user-associated feature sets, each associated with respective log-in data such that a respective other user-associated feature set can be obtained by a given configurable end-user device when its respective log-in data is transmitted to said user configuration profile server.
